# EUROPEAN PATENT APPLICATION

(11) **EP 4 492 262 A1**
(43) Date of publication of application: **15.01.2025**
(21) Application number: 23851928.4
(22) Date of filing: 10.08.2023
(51) Int. Cl.: G06F 16/9535

(54) **SERVICE RECOMMENDATION METHOD AND ELECTRONIC DEVICE**

(30) Priority: 12.08.2022 CN 202210970059
(71) Applicant: Huawei Technologies Co., Ltd., Shenzhen, Guangdong 518129 (CN)
(72) Inventor: CHEN, Yue, Shenzhen, Guangdong 518129 (CN); FU, Zhaoyang, Shenzhen, Guangdong 518129 (CN); ZHU, Yue, Shenzhen, Guangdong 518129 (CN); WANG, Yunlu, Shenzhen, Guangdong 518129 (CN)
(74) Representative: Gill Jennings & Every LLP
(86) International application number: PCT/CN2023/112189
(87) International publication number: WO 2024/032707

(57) **Abstract**

This application provides a service recommendation method and an electronic device, and relates to the field of terminal technologies, so that a user can more quickly find an atomic service that the user wants to use, and human-machine interaction efficiency can be improved. The method includes: arranging an application icon card or an FA card of at least one application on a display recommendation interface according to a display recommendation rule, where the application icon card is used to provide an entry for starting the application, and the FA card is used to display at least a part of function information of the application on the FA card; and when an application icon card of a first application is arranged on the display recommendation interface, displaying an FA card of the first application at an arrangement location of the application icon card of the first application, where the at least one application includes the first application.

## Description

This application claims priority to Chinese Patent Application No. 202210970059.8, filed with the China National Intellectual Property Administration on August 12, 2022 and entitled "SERVICE RECOMMENDATION METHOD AND ELECTRONIC DEVICE", which is incorporated herein by reference in its entirety.

### TECHNICAL FIELD

This application relates to the field of terminals, and in particular, to a service recommendation method and an electronic device.

### BACKGROUND

Currently, a user may install various applications on a terminal, and obtain corresponding services through the applications. As types and a quantity of applications increase, how to enable the user to more quickly find an application that the user wants to use and obtain a corresponding service becomes an urgent problem to be resolved.

### SUMMARY

Embodiments of this application provide a service recommendation method and an electronic device, so that a user can quickly and directly access a desired atomic service, and human-machine interaction efficiency can be improved.

To achieve the foregoing objective, the following technical solutions are used in this application.

According to a first aspect, a technical solution of this application provides a service recommendation method, applied to an electronic device, where the method includes:
arranging an application icon card or an FA card of at least one application on a display recommendation interface according to a display recommendation rule, where the application icon card is used to provide an entry for starting the application, and the FA card is used to display at least a part of function information of the application on the FA card; and
when an application icon card of a first application is arranged on the display recommendation interface, displaying an FA card of the first application at an arrangement location of the application icon card of the first application, where the at least one application includes the first application.

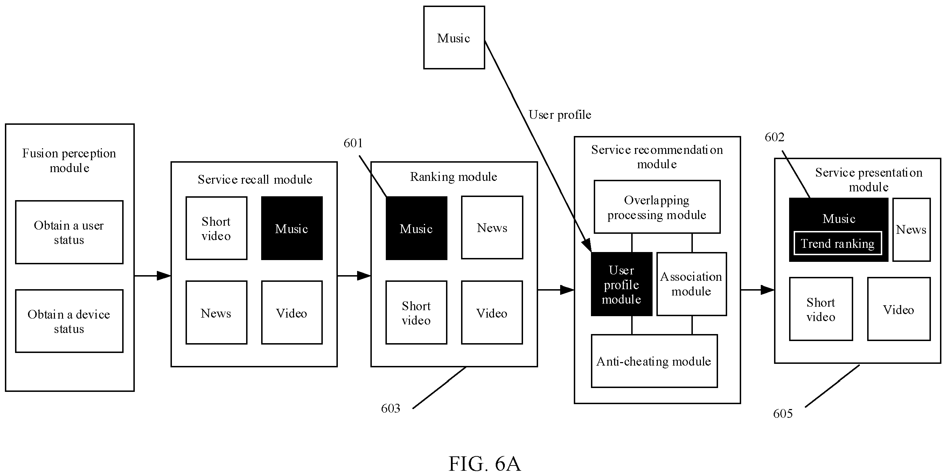

For example, as shown in FIG. 6A, an application icon card 601 of a music application (an example of the first application), an application icon card of a news application, an application icon card of a short video application, and an application icon card of a video application are arranged on a display recommendation interface 603. For example, the application icon card of the music application is replaced. As shown in FIG. 6A, the electronic device may display an FA card 602 of the music application at an arrangement location of the application icon card of the music application on a display recommendation interface 605.

In this way, the electronic device may replace application icon cards of one or more applications on the display recommendation interface with corresponding FA cards, and display the corresponding FA cards at arrangement locations of the corresponding application icon cards, so that a user can conveniently and directly access a desired atomic service through the FA cards of the applications, and human-machine interaction efficiency can be improved.

In a possible design of the first aspect, the display recommendation rule is used to sequentially arrange the application icon card and/or the FA card of the at least one application based on historical data of using the at least one application by the user.

Optionally, the historical data of using the application by the user includes but is not limited to one or more of the following data: a quantity of historical taps of the user on the application and use duration. For example, an application that is historically used by the user for a larger quantity of times or has longer use duration has a higher ranking location on the display recommendation interface.

In a possible design of the first aspect, the method further includes:
when display sizes of the FA card of the first application and the application icon card of the first application on the display recommendation interface are different, rearranging the application icon card or the FA card of the at least one application on the display recommendation interface according to the display recommendation rule, to adapt to a display effect of the FA card of the first application on the display recommendation interface.

In a possible design of the first aspect, the rearranging the application icon card or the FA card of the at least one application on the display recommendation interface according to the display recommendation rule includes:
when the display size of the FA card of the first application on the display recommendation interface is greater than the display size of the application icon card of the first application on the display recommendation interface, skipping arranging an application icon card or an FA card of a second application on the display recommendation interface, where the at least one application includes the second application.

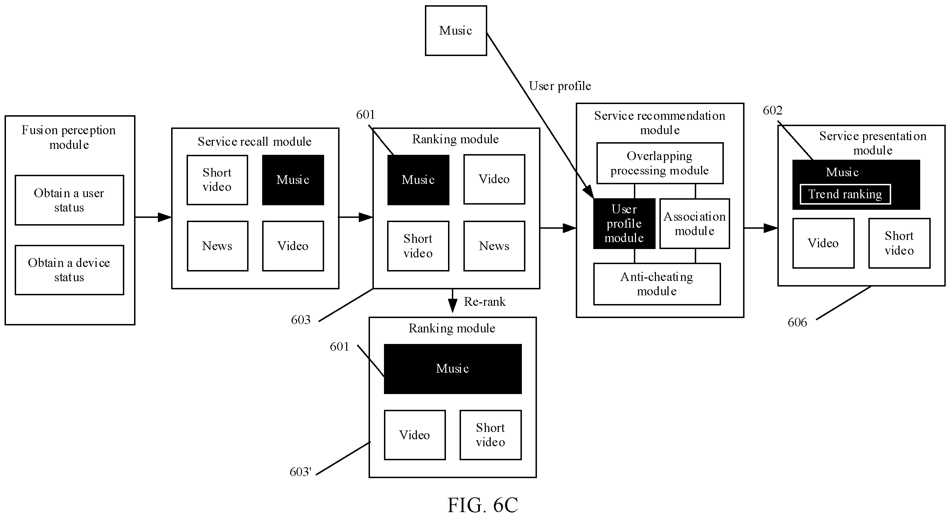

For example, as shown in FIG. 6C, the electronic device determines that the application icon cards or FA cards of the applications on the display recommendation interface 603 are sequentially ranked as follows: the application icon card 601 of the music application, the application icon card of the video application, the application icon card of the short video application, and the application icon card of the news application. It is assumed that a display size (for example, occupying 1*2 grids) of the FA card of the music application on the display recommendation interface is greater than a display size (for example, occupying 1*1 grid) of the application icon card 601 of the music application on the display recommendation interface. In this case, for subsequent normal displaying of the FA card of the music application on the display recommendation interface, during re-ranking, application icon cards or FA cards of some applications that have lower ranking locations are removed from the display recommendation interface.

For example, as shown in FIG. 6C, the electronic device re-ranks the application icon card 601 of the music application, the application icon card of the video application, the application icon card of the short video application, and the application icon card of the news application. Because the application icon card of the news application has a lower arrangement location, the application icon card of the news application is preempted by the to-be-displayed FA card of the music application. Therefore, the application icon card of the news application is no longer arranged on a display recommendation interface 603'.

Optionally, after the re-ranking, an arrangement location of the application icon card 601 of the music application on the display recommendation interface 603' changes from occupying 1*1 grid to occupying 1*2 grids.

After the re-ranking, as shown in FIG. 6C, the electronic device may display the FA card 602 of the music application at the arrangement location of the application icon card of the music application on the display recommendation interface 606.

In this way, the electronic device can adapt to a display effect of the FA card by using the foregoing re-ranking procedure, so that the FA card can be normally displayed. Further, the user can directly access the desired atomic service through the FA card, and human-machine interaction efficiency can be improved.

In a possible design of the first aspect, the displaying an FA card of the first application at an arrangement location of the application icon card of the first application includes:
when both the application icon card of the first application and the FA card of the first application are arranged on the display recommendation interface, displaying only the FA card of the first application on the display recommendation interface.

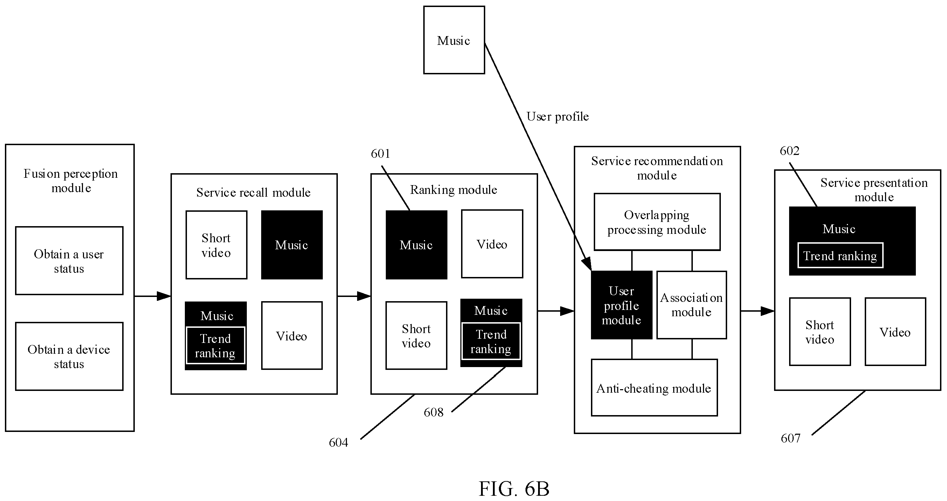

For example, as shown in FIG. 6B, both the application icon card 601 of the music application and an FA card 608 of the music application are arranged on a display recommendation interface 604, and the electronic device may display only the FA card 602 of the music application on a display recommendation interface 607.

In this way, more FA cards can be displayed on the display recommendation interface, and a probability that the FA cards are used by the user is increased.

In a possible design of the first aspect, the method further includes:
in response to a first operation of the user on the FA card of the first application, opening a page that is of the first application and that is about function information displayed on the FA card.

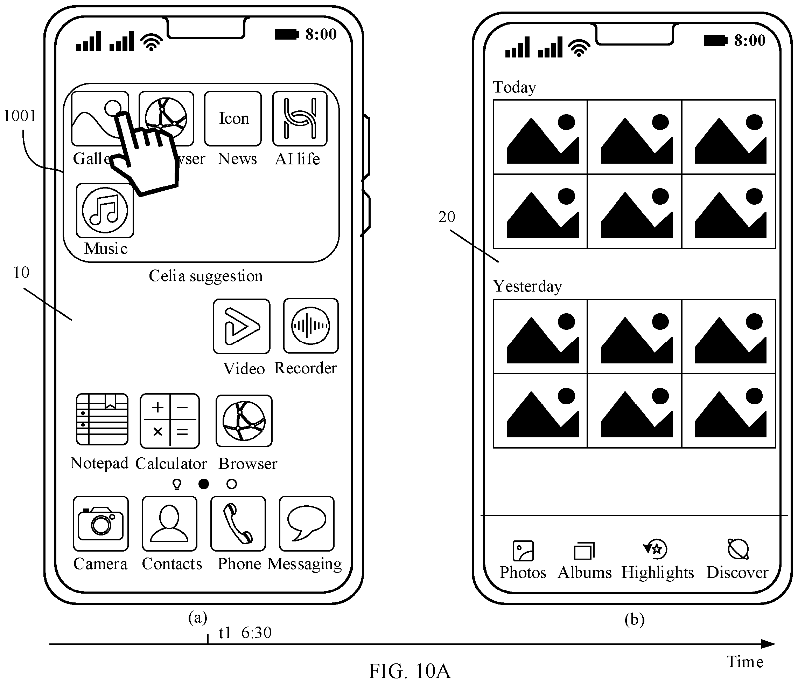

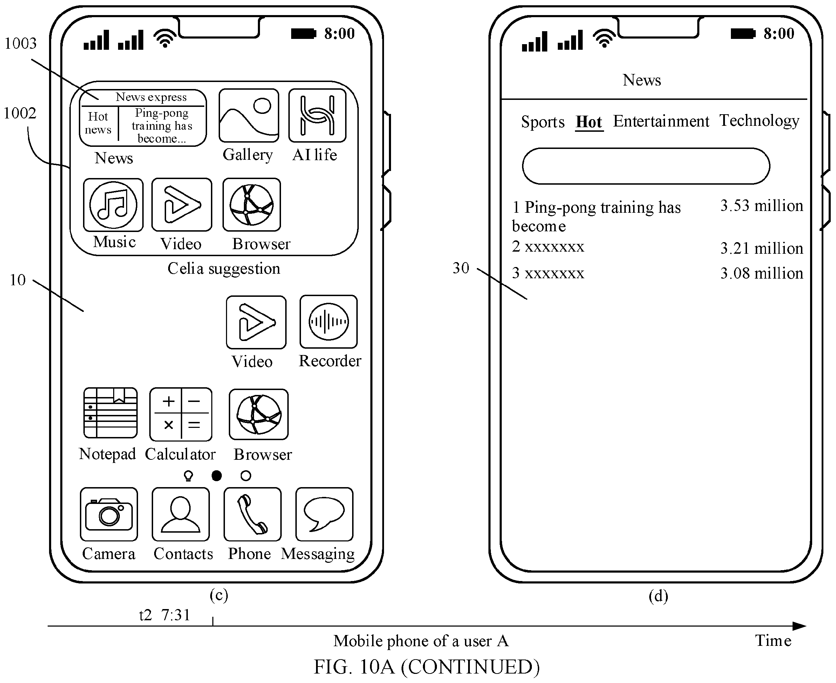

For example, as shown in (a) in FIG. 10A, in response to a tap operation (an example of the first operation) of the user on an FA card 1003 of the news application, as shown in (b) in FIG. 10A, the electronic device opens a page 30 that is of the news application and that is about function information displayed on the FA card 1003.

In a possible design of the first aspect, the FA card of the first application is used to display function information of a first atomic service, and the displaying an FA card of the first application at an arrangement location of the application icon card of the first application includes:
when a first recommendation condition of the first atomic service is met, displaying the FA card of the first application at the arrangement location of the application icon card of the first application, and displaying the function information of the first atomic service on the FA card of the first application.

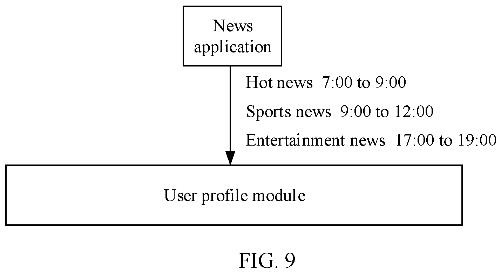

For example, it is assumed that the electronic device determines, based on a user profile of each atomic service shown in FIG. 9, that a first recommendation condition of a "hot news" service (an example of the first atomic service) is: in a time period of 7:00 to 9:00.

As shown in (c) in FIG. 10A, if current time is 7:31, the electronic device may display the FA card 1003 of the news application at an arrangement location of the application icon card of the news application, and display function information of the "hot news" service (for example, "ping-pong training has become...") on the FA card 1003.

In this way, a use habit of using each atomic service by the user can be determined based on the user profile of using each atomic service by the user, and an FA card that the user wants to use is recommended to the user in time, a location, and an environment in which the user is accustomed to using the atomic service, to improve a probability of using the recommended FA card by the user.

In a possible design of the first aspect, the first recommendation condition of the first atomic service is determined by a user profile that is of the first atomic service and that is provided by the first application.

For example, as shown in FIG. 9, the news application (an example of the first application) provides user profiles of the following atomic services: {hot news 7:00 to 9:00; sports news 9:00 to 12:00; entertainment news 17:00 to 19:00}. These user profiles indicate that: A user A is accustomed to searching for and browsing the hot news from 7:00 to 9:00. Correspondingly, it may be determined that a recommendation condition of the "hot news" service is: a period from 7:00 to 9:00. The user A is accustomed to searching for and browsing the sports news from 9:00 to 12:00. Correspondingly, it may be determined that a recommendation condition of the "sports news" service is: a period from 9:00 to 12:00. The user A is accustomed to searching for and browsing the entertainment news from 17:00 to 19:00. Correspondingly, it may be determined that a recommendation condition of the "entertainment news" service is: a period from 17:00 to 19:00.

In a possible design of the first aspect, the method further includes:
obtaining use information of historical association between a third application and the first atomic service, and determining the first recommendation condition of the first atomic service based on the use information of the historical association.

For example, it is assumed that a music application 5 is an unaccessed application, and the electronic device cannot directly obtain a user profile of each atomic service in the music application 5 from the application. When an application icon card of the music application 5 is arranged on the display recommendation interface, the electronic device may obtain use data of historical association between the music application 5 and a used application, to determine whether a recommendation condition of an FA card of the music application 5 is met. It is determined that the user frequently uses a music application 6 recently. Therefore, an association module considers that a probability of using, by the user in a current time period, a "playlist recommendation" service of the music application 5 associated with the music application 6 is high, and the current time period meets a first recommendation condition of the "playlist recommendation" service. Therefore, the association module may replace the application icon card of the music application 5 on the display recommendation interface with an FA card of the "playlist recommendation" service of the music application 5. Subsequently, a service presentation module may present the FA card of the "playlist recommendation" service of the music application 5. In this way, the user can directly access the "playlist recommendation" service through the FA card of the music application 5.

In a possible design of the first aspect, the first recommendation condition includes one or more of the following conditions: a time period in which the first atomic service is recommended, a location of the electronic device, an environment in which the first atomic service is recommended, a battery level of the electronic device is in a first range, signal strength of the electronic device is in a second range, and the electronic device is connected to a target peripheral device.

For example, a user profile of an atomic service indicates that a "playlist recommendation" service of a music application is recommended on rainy weather. Subsequently, when detecting that it is rainy weather currently, the electronic device may recommend the "playlist recommendation" service to the user.

For example, a user profile of an atomic service indicates that an "audio book" service of an audio application is recommended when the battery level is low. Optionally, the "audio book" service may be an atomic service with low power consumption. Subsequently, when the electronic device detects that the battery level is lower than a threshold, the electronic device may recommend the "audio book" service to the user.

For example, a user profile of an atomic service indicates that a "local audio" service of an audio application is recommended when a signal of the electronic device is poor. The "local audio" service usually does not require the electronic device to have good network signal quality. Subsequently, when detecting that signal strength is lower than a threshold, the electronic device may recommend the "local audio" service to the user.

The foregoing first recommendation condition is merely an example. It should be understood that the electronic device may recommend the FA card to the user under any condition in which the user is accustomed to or has a high probability of using the FA card, so as to implement a technical effect of enabling the user to directly access the atomic service.

In a possible design of the first aspect, the FA card of the first application is used to display the function information of the first atomic service and/or function information of a second atomic service.

The displaying an FA card of the first application at an arrangement location of the application icon card of the first application includes: when both the first recommendation condition of the first atomic service and a second recommendation condition of the second atomic service are met, displaying the FA card of the first application at the arrangement location of the application icon card of the first application, and simultaneously displaying the function information of the first atomic service and the function information of the second atomic service on the FA card of the first application.

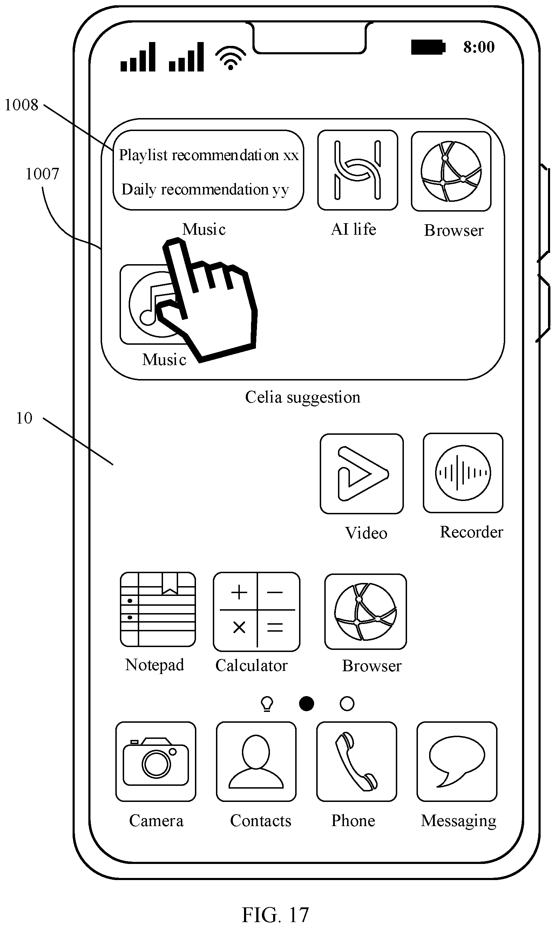

For example, as shown in FIG. 17, a mobile phone may present an FA card 1008 of the music application on a Celia suggestion card 1007 on a desktop. The FA card 1008 may present function information of the "playlist recommendation" service and function information of a "daily recommendation" service. For example, the FA card 1008 may include an introduction to a song in a recommended playlist and the like.

In this way, the electronic device may include function information of more atomic services through one FA card, so that more function information selection opportunities can be provided for the user. The user may select function information of interest from function information of a plurality of atomic services on the FA card. This helps improve a probability that the user taps the function information.

Optionally, if a recommendation priority of the playlist recommendation service is higher than a recommendation priority of the daily recommendation service, related content of the playlist recommendation service is displayed in front of related content of the daily recommendation service. In this way, function information of an atomic service with a higher recommendation priority is displayed at a more prominent location on the display recommendation interface, so that attention of the user can be drawn with a higher probability, so as to improve a probability that the user taps the function information, and improve human-machine interaction efficiency.

In a possible design of the first aspect, the FA card of the first application is used to display the function information of the first atomic service and/or function information of a second atomic service.

The displaying an FA card of the first application at an arrangement location of the application icon card of the first application includes: when both the first recommendation condition of the first atomic service and a second recommendation condition of the second atomic service are met, displaying the FA card of the first application at the arrangement location of the application icon card of the first application, and displaying one of the function information of the first atomic service and the function information of the second atomic service on the FA card of the first application based on recommendation priorities of the first atomic service and the second atomic service.

For example, if a recommendation priority of the "playlist recommendation" service of the music application is higher than a recommendation priority of a "daily recommendation" service, a mobile phone may present the FA card of the music application on a Celia suggestion card 1007 on a desktop. The FA card may present related function information of the "playlist recommendation" service.

In this way, the electronic device may present more function information of an atomic service through one FA card. For example, more recommended songs in the "playlist recommendation" service may be presented through one FA card. The user may select a favorite song from the recommended songs, and does not need to or seldom need to enter a main interface of the music application to select a song. This helps simplify user operations, shorten time for obtaining the atomic service by the user, and improve efficiency of obtaining the atomic service by the user.

In a possible design of the first aspect, the displaying an FA card of the first application at an arrangement location of the application icon card of the first application includes:
when a historical click-through rate of the function information of the first atomic service displayed on the FA card of the first application is lower than a threshold, reducing time for displaying the FA card of the first application at the arrangement location of the application icon card of the first application.

If the historical click-through rate of the user for the function information of the first atomic service is low, it indicates that the user actually does not want to use the first atomic service, or a probability of using the first atomic service by the user is low. In this case, the mobile phone may reduce display duration of the FA card of the first atomic service.

In a possible design of the first aspect, the method further includes:
when an application icon card of a fourth application is arranged on the display recommendation interface, displaying an FA card of the fourth application at an arrangement location of the application icon card of the fourth application, and displaying function information of a third atomic service on the FA card of the fourth application, where the at least one application further includes the fourth application; and
when a historical click-through rate of the function information of the third atomic service displayed on the FA card of the fourth application is lower than a threshold, skipping displaying the FA card of the fourth application at the arrangement location of the application icon card of the fourth application.

If the historical click-through rate of the user for the function information of the third atomic service is low, it indicates that the user actually does not want to use the third atomic service, or a probability of using the third atomic service by the user is low. In this case, the mobile phone no longer recommends the FA card of the third atomic service to the user, to avoid excessive distraction of the user.

In a possible design of the first aspect, the displaying an FA card of the first application at an arrangement location of the application icon card of the first application includes:
when the historical click-through rate of the function information of the first atomic service displayed on the FA card of the first application is higher than the threshold, restoring displaying the FA card of the first application at the arrangement location of the application icon card of the first application.

If the historical click-through rate of the user for the function information of the first atomic service of the first application is high, it indicates that a probability that the user currently wants to use the first atomic service is also high. In this case, the mobile phone may display the FA card of the first application at the arrangement location of the application icon card of the first application.

According to a second aspect, a service recommendation apparatus is provided, applied to an electronic device or a component (for example, a chip system) that supports a function of an electronic device, where the apparatus includes:
a processing module, configured to arrange an application icon card or an FA card of at least one application on a display recommendation interface according to a display recommendation rule, where the application icon card is used to provide an entry for starting the application, the FA card is used to display at least a part of function information of the application on the FA card, and the at least one application includes a first application; and
a display module, configured to: when an application icon card of the first application is arranged on the display recommendation interface, display an FA card of the first application at an arrangement location of the application icon card of the first application.

In a possible design of the second aspect, the display recommendation rule is used to sequentially arrange the application icon card and/or the FA card of the at least one application based on historical data of using the at least one application by the user.

In a possible design of the second aspect, the processing module is further configured to:
when display sizes of the FA card of the first application and the application icon card of the first application on the display recommendation interface are different, rearrange the application icon card or the FA card of the at least one application on the display recommendation interface according to the display recommendation rule, to adapt to a display effect of the FA card of the first application on the display recommendation interface.

In a possible design of the second aspect, the rearranging the application icon card or the FA card of the at least one application on the display recommendation interface according to the display recommendation rule includes:
when the display size of the FA card of the first application on the display recommendation interface is greater than the display size of the application icon card of the first application on the display recommendation interface, skipping arranging an application icon card or an FA card of a second application on the display recommendation interface, where the at least one application includes the second application.

In a possible design of the second aspect, the displaying an FA card of the first application at an arrangement location of the application icon card of the first application includes:
when both the application icon card of the first application and the FA card of the first application are arranged on the display recommendation interface, display only the FA card of the first application on the display recommendation interface.

In a possible design of the second aspect, the processing module is further configured to:
in response to a first operation of the user on the FA card of the first application, control opening of a page that is of the first application and that is about function information displayed on the FA card.

In a possible design of the second aspect, the FA card of the first application is used to display function information of a first atomic service, and the displaying an FA card of the first application at an arrangement location of the application icon card of the first application includes:
when a first recommendation condition of the first atomic service is met, displaying the FA card of the first application at the arrangement location of the application icon card of the first application, and displaying the function information of the first atomic service on the FA card of the first application.

In a possible design of the second aspect, the first recommendation condition of the first atomic service is determined by a user profile that is of the first atomic service and that is provided by the first application.

In a possible design of the second aspect, the processing module is further configured to:
obtain use information of historical association between a third application and the first atomic service, and determine the first recommendation condition of the first atomic service based on the use information of the historical association.

In a possible design of the second aspect, the first recommendation condition includes one or more of the following conditions: a time period in which the first atomic service is recommended, a location of the electronic device, an environment in which the first atomic service is recommended, a battery level of the electronic device is in a first range, signal strength of the electronic device is in a second range, and the electronic device is connected to a target peripheral device.

In a possible design of the second aspect, the FA card of the first application is used to display the function information of the first atomic service and/or function information of a second atomic service.

The displaying an FA card of the first application at an arrangement location of the application icon card of the first application includes: when both the first recommendation condition of the first atomic service and a second recommendation condition of the second atomic service are met, displaying the FA card of the first application at the arrangement location of the application icon card of the first application, and simultaneously displaying the function information of the first atomic service and the function information of the second atomic service on the FA card of the first application.

In a possible design of the second aspect, the FA card of the first application is used to display the function information of the first atomic service and/or function information of a second atomic service.

The displaying an FA card of the first application at an arrangement location of the application icon card of the first application includes: when both the first recommendation condition of the first atomic service and a second recommendation condition of the second atomic service are met, displaying the FA card of the first application at the arrangement location of the application icon card of the first application, and displaying one of the function information of the first atomic service and the function information of the second atomic service on the FA card of the first application based on recommendation priorities of the first atomic service and the second atomic service.

In a possible design of the second aspect, the displaying an FA card of the first application at an arrangement location of the application icon card of the first application includes:
when a historical click-through rate of the function information of the first atomic service displayed on the FA card of the first application is lower than a threshold, reducing time for displaying the FA card of the first application at the arrangement location of the application icon card of the first application.

In a possible design of the second aspect, the at least one application further includes a fourth application, and the display module is further configured to:
when a historical click-through rate of the function information of the third atomic service displayed on the FA card of the fourth application is lower than a threshold, skip displaying the FA card of the fourth application at the arrangement location of the application icon card of the fourth application.

In a possible design of the second aspect, the displaying an FA card of the first application at an arrangement location of the application icon card of the first application includes:
when the historical click-through rate of the function information of the first atomic service displayed on the FA card of the first application is higher than the threshold, restoring displaying the FA card of the first application at the arrangement location of the application icon card of the first application.

According to a third aspect, a technical solution of this application provides an electronic device, including an input device, a display, one or more processors, a memory, and one or more computer programs. The processor is coupled to the input device, and the memory, the one or more computer programs are stored in the memory, and when the electronic device runs, the processor executes the one or more computer programs stored in the memory, so that the electronic device performs the method in any design of the first aspect.

According to a fourth aspect, this application provides an apparatus. The apparatus includes a processor and a memory, the memory is configured to store computer program code, the computer program code includes computer instructions, and when executing the computer instructions, the processor performs the method in any possible design of the first aspect in this application.

According to a fifth aspect, a technical solution of this application provides a computer-readable storage medium, including computer instructions. When the computer instructions are run on an electronic device, the electronic device is enabled to perform the method in any possible design of the first aspect.

According to a sixth aspect, a technical solution of this application provides a computer program product. When the computer program product runs on an electronic device, the electronic device is enabled to perform the method in any possible design of the first aspect.

### BRIEF DESCRIPTION OF DRAWINGS

FIG. 1 is an interface diagram of an application icon card according to an embodiment of this application;
FIG. 2 is an interface diagram of an FA card according to an embodiment of this application;
FIG. 3 is a diagram of a system architecture according to an embodiment of this application;
FIG. 4 is a diagram of a structure of an electronic device according to an embodiment of this application;
FIG. 5 is a diagram of a structure of an electronic device according to an embodiment of this application;
FIG. 6A is a diagram of a structure of an electronic device according to an embodiment of this application;
FIG. 6B is a diagram of a structure of an electronic device according to an embodiment of this application;
FIG. 6C is a diagram of a structure of an electronic device according to an embodiment of this application;
FIG. 7 is a diagram of a structure of an electronic device according to an embodiment of this application;
FIG. 8 is a diagram of a user status and a device status according to an embodiment of this application;
FIG. 9 is a diagram of a user profile according to an embodiment of this application;
FIG. 10A is an interface diagram according to an embodiment of this application;
FIG. 10B is an interface diagram according to an embodiment of this application;
FIG. 10C is an interface diagram according to an embodiment of this application;
FIG. 10D is an interface diagram according to an embodiment of this application;
FIG. 11 is a diagram of a user profile according to an embodiment of this application;
FIG. 12A(a) and FIG 12A(b) are interface diagrams according to an embodiment of this application;
FIG. 12B(a) and FIG 12B(b) are an interface diagram according to an embodiment of this application;
FIG. 13(a) and FIG. 13(b) are an interface diagram according to an embodiment of this application;
FIG. 14 is a diagram of overlapped user profiles according to an embodiment of this application;
FIG. 15 is a diagram of a user profile overlapping processing procedure according to an embodiment of this application;
FIG. 16 is a diagram of a user profile overlapping processing procedure according to an embodiment of this application;
FIG. 17 is an interface diagram according to an embodiment of this application;
FIG. 18 is a diagram of an anti-cheating processing procedure according to an embodiment of this application;
FIG. 19 is a diagram of a structure of a rendering apparatus according to an embodiment of this application; and
FIG. 20 is a diagram of a structure of a chip system according to an embodiment of this application.

### DESCRIPTION OF EMBODIMENTS

In the specification and the accompanying drawings of this application, terms such as "first" and "second" are intended to distinguish between different objects or distinguish between different processing on a same object. Words such as "first" and "second" may distinguish between same items or similar items that provide basically same functions and purposes. For example, a first device and a second device are merely intended to distinguish between different devices, and do not limit a sequence thereof. A person skilled in the art may understand that the words such as "first" and "second" do not limit a quantity or an execution sequence, and the words such as "first" and "second" do not indicate a definite difference.

"At least one" means one or more, and "a plurality of" means two or more.

"And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner.

For ease of understanding, terms and concepts related to embodiments of this application are first described.

### 1. Service card

The service card may provide an entry for displaying an application or a corresponding atomic service through a card style. For example, specific content of the atomic service may be directly displayed on the card. The service card may be used to display function information of the application. Optionally, the service card may be displayed as an identifier, a display box, or the like in a shape like a square or an ellipse. A specific display shape, effect, and the like of the service card are not limited in embodiments of this application.

Optionally, the service card may include an application icon card and an FA (feature ability, feature ability) card.

### 2. Atomic service

In some examples, an application may include atomic services with a finer granularity. The atomic service may also be referred to as a meta service and the like. The atomic service may be understood as an application form that can be used to provide one or more convenient services for a user. A music application is used as an example. The music application may support atomic services such as "daily recommendation", "playlist recommendation", and "private radio".

In some examples, the atomic service may be displayed in a form of an FA card, and function information of the atomic service is presented on the FA card.

### 3. Application icon card

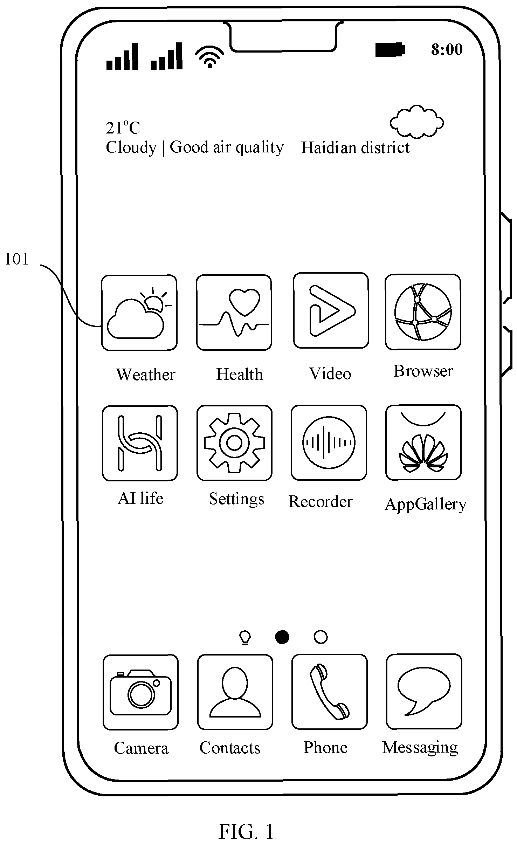

The application icon card may represent an application. For example, an icon card of a weather application shown in FIG. 1 may represent the weather application. The application icon card may be used to provide an entry for starting the corresponding application. A user may tap the application icon card to start the corresponding application and implement a corresponding function of the application.

### 4. FA (Feature Ability, feature ability) card

In some examples, information about an atomic service of an application (Application, APP) of a user may be displayed on a desktop in a form of an FA card. The FA card may represent the atomic service of the application. In some examples, the user may tap the FA card to open an atomic service page corresponding to the application. In this way, a service can be directly accessed, and layer jumps can be reduced. Optionally, the FA card may be configured for the application as required. For example, at least one FA card may be configured for an application.

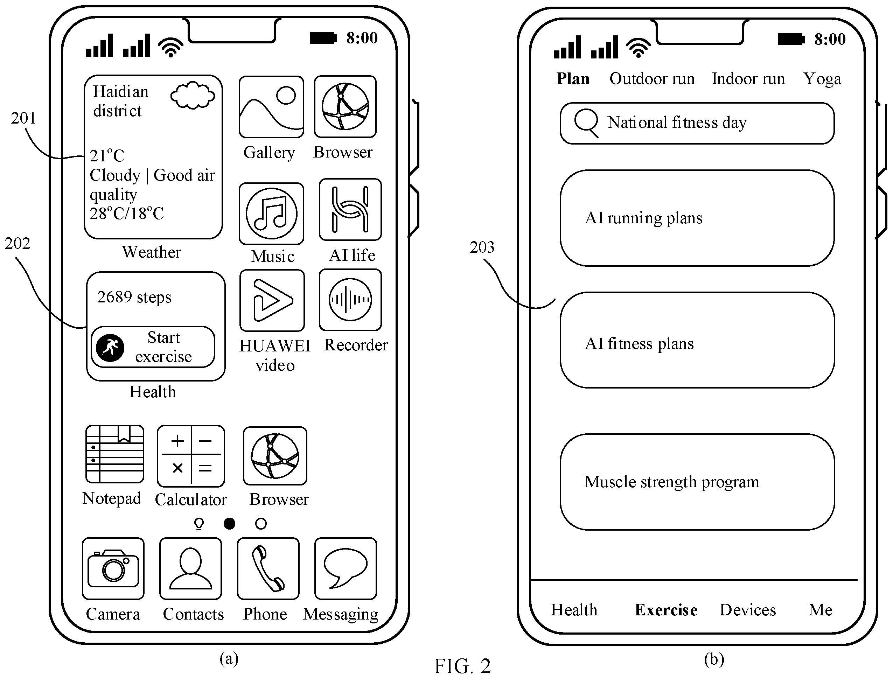

For example, (a) in FIG. 2 shows an FA card 201 and an FA card 202. The FA card may increase use convenience of the application, and a function that can be implemented only after the app is started may be directly implemented through the FA card. For example, in FIG. 1, the user needs to tap an application icon card 101 of the weather application to start the weather application to view the weather. In comparison, in (a) in FIG. 2, the user does not need to start the weather application, and may view a weather overview through the FA card 201. This reduces operation costs and operation complexity of the user. For another example, as shown in (a) in FIG. 2, the FA card 202 may present information about a "step quantity" service and a "start exercise" service. When detecting that the user taps an area in which "start exercise" information is located on the FA card 202, a mobile phone may directly jump to an interface 203 corresponding to the "start exercise" service, as shown in (b) in FIG. 2. The interface 203 is a page corresponding to function information of "start exercise" displayed on the FA card 202. The user may set an exercise plan on the interface 203, and start exercise.

For another example, if an FA card of a news application is displayed on a screen of the mobile phone, the FA card presents introduction information of news 1 and news 2. When detecting that the user taps the introduction information of the news 1, the mobile phone may directly jump to a browsing interface of the news 1, so that the user can quickly browse the news 1.

The FA card may provide more user-friendly functions. For example, the user may share content such as an article or a page in a form of an FA card through a card operation, and a friend can directly open and view the content without downloading. For another example, compared with a conventional application, the FA card may provide a more atomized service and display more detailed service content, so that the user can obtain and use the service more conveniently. In addition, the FA card features installation-free, multi-device forwarding, and the like.

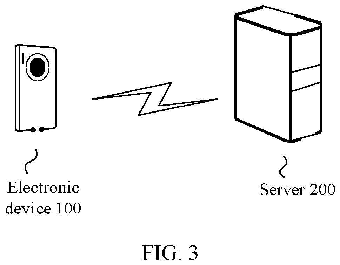

Embodiments of this application provide a service recommendation method. The method may be applied to a service recommendation system. FIG. 3 shows an example architecture of the service recommendation system. The system includes an electronic device 100 and a server 200.

A plurality of applications may be installed on the electronic device 100. The applications can provide corresponding atomic services. A music application is used as an example. The music application may provide atomic services such as "daily playlist", "playlist recommendation", and "private radio". Optionally, the electronic device 100 includes but is not limited to various terminal devices. For example, the electronic device 100 may be an electronic device like a mobile phone, a watch, a smart screen (television), a tablet computer, a personal computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device 100 is not limited in embodiments of this application.

The server 200 may be connected to the electronic device 100. The server 200 may be configured to provide service-related content for the electronic device 100. For example, if a video application is installed on the electronic device 100, the server 200 may send a video stream to the electronic device 100, and the electronic device 100 decodes the video stream and plays the video stream through the video application, for the user to view.

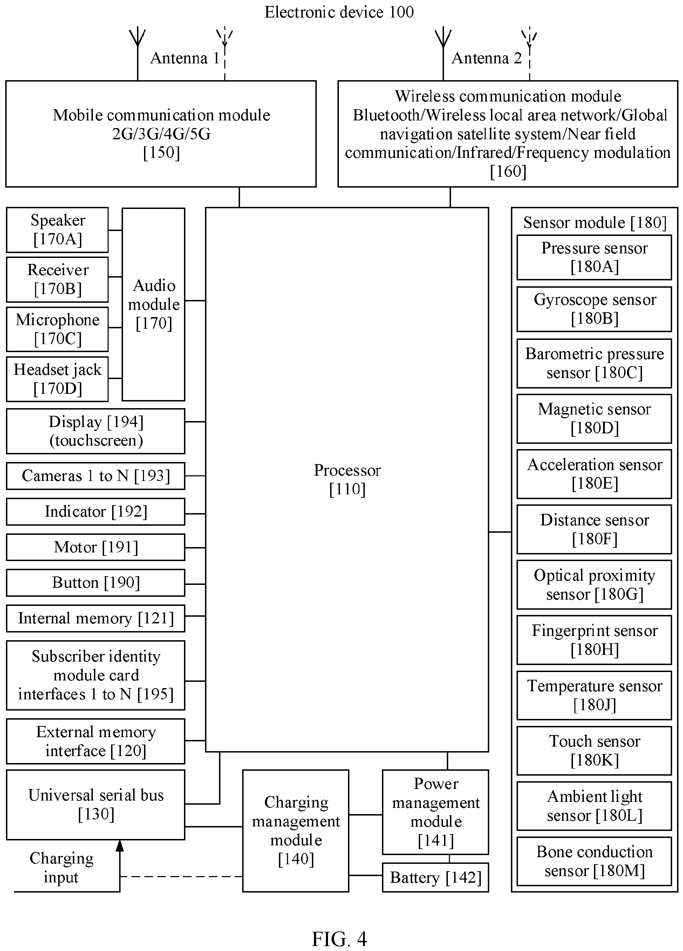

FIG. 4 shows an example structure of the electronic device 100. As shown in FIG. 4, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

The processor 110 may be further integrated with an internal memory for storing instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

The charging management module 140 is configured to receive a charging input from a charger.

The power management module 141 is configured to connect the battery 142, the charging management module 140, and the processor 110. The power management module 141 receives an input from the battery 142 and/or the charging management module 140, and supplies power to the processor 110, the display 194, the camera 193, and the like.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G, 3G, 4G, 5G, and the like. The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), and the like and that is applied to the electronic device 100.

The electronic device 100 implements a display function through the GPU, the display 194, the application processor, and the like. The GPU is a microprocessor for image processing, and is connected to the display 194 and the application processor.

The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193. For example, the ISP may control, based on a photographing parameter, the photosensitive element to perform exposure and photographing.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like an RGB format or a YUV format.

In some embodiments, the electronic device 100 may include one or N cameras 193, where N is a positive integer greater than 1. The camera 193 may be located in an edge area of the electronic device, may be an off-screen camera, or may be a pop-up camera. The cameras 193 may include a rear-facing camera, and may further include a front-facing camera. A specific location and form of the camera 193 are not limited in embodiments of this application.

The digital signal processor is configured to process a digital signal, and may process another digital signal in addition to the digital image signal. For example, when the electronic device 100 selects a frequency, the digital signal processor is configured to perform Fourier transform on frequency energy, or the like.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs instructions stored in the internal memory 121 and/or instructions stored in the memory disposed in the processor, to perform various function applications and data processing of the electronic device 100. The internal memory 121 may be any type of memory in the electronic device 100. The internal memory 121 may be an independent module, or may be integrated with another module.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio data into an analog audio electrical signal for output, and is also configured to convert an analog audio electrical signal input into digital audio data. The audio module 170 may include an analog-to-digital converter and a digital-to-analog converter. For example, the audio module 170 is configured to convert an analog audio electrical signal output by the microphone 170C into digital audio data. The audio module 170 may be further configured to encode and decode audio data. In some embodiments, the audio module 170 may be disposed in the processor 110, or some functional modules in the audio module 170 are disposed in the processor 110.

The speaker 170A, also referred to as a "loudspeaker", is configured to convert an analog audio electrical signal into a sound signal. The electronic device 100 may be used to listen to music or answer a call in a hands-free mode through the speaker 170A.

The receiver 170B, also referred to as an "earpiece", is configured to convert an analog audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an analog audio electrical signal. When making a call or sending voice information, the user may make a sound near the microphone 170C through the mouth of the user, to input a sound signal to the microphone 170C. The microphone 170C may be a built-in component of the electronic device 100, or may be an external accessory of the electronic device 100.

In some embodiments, the electronic device 100 may include one or more microphones 170C. The one or more microphones cooperate to implement a function of collecting sound signals in all directions, and converting the collected sound signals into an analog audio electrical signal, and may further implement a noise reduction function, a sound source identification function, a directional recording function, or the like.

A quantity of microphones 170C is not specifically limited in embodiments of this application.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

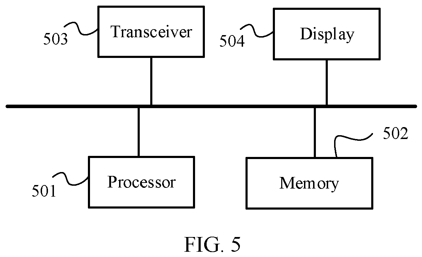

For example, FIG. 5 shows another example structure of an electronic device. As shown in FIG. 5, the electronic device includes a processor 501, a memory 502, a transceiver 503, and a display 504. For implementations of the processor 501, the memory 502, and the display 504, refer to implementations of the processor and the memory of the electronic device shown in FIG. 4. The transceiver 503 is configured for interaction between the electronic device and another device (for example, a server 200). Optionally, the transceiver 503 may be a component based on a communication protocol like Wi-Fi, Bluetooth, or another communication protocol.

In addition, for a structure of another device (for example, the server 200) in the system shown in FIG. 3, refer to the structure of the electronic device shown in FIG. 5. Details are not described herein again.

FIG. 5 and FIG. 4 are merely possible examples of structures of the electronic device 100 in the system and the another device (for example, the server 200) in the system, and do not constitute a limitation on the structures of the electronic device 100 and the server 200.

FIG. 6A shows another example structure of the electronic device 100. As shown in FIG. 6A, the electronic device 100 may include a fusion sensing module, a service recall module, a ranking module, a service recommendation module, and a service presentation module.

The fusion perception module may be configured to collect perception information, and may send the perception information to the service recall module. The perception information includes but is not limited to user status information and device status information. Optionally, the fusion perception module may include various types of sensors, such as a gyroscope, an accelerometer, and a camera.

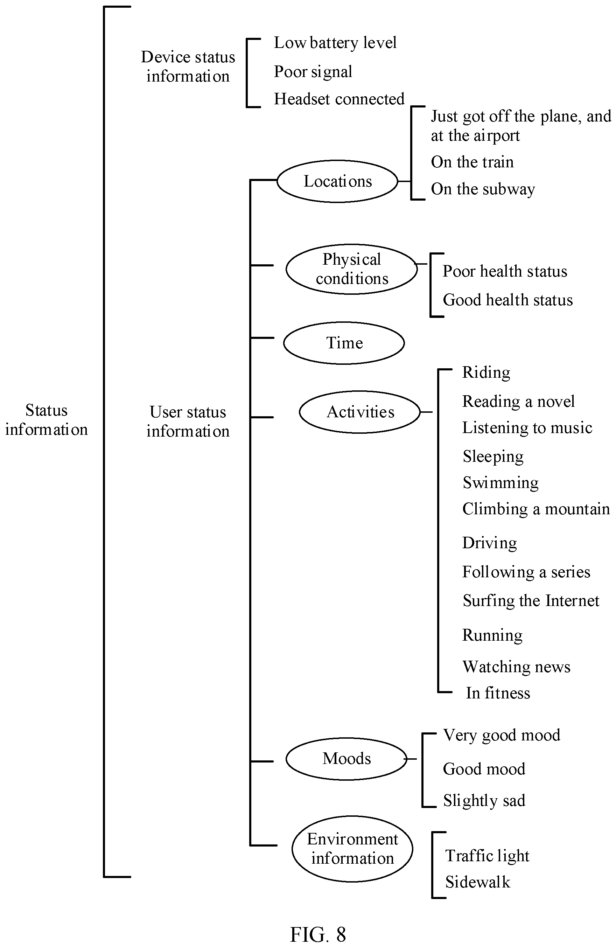

The device status information includes at least one of the following information: a location, a battery level, and signal quality. The user status information includes at least one of the following information: information about an activity performed by a user, a health status, a mood, and an environment in which the user is located. For example, FIG. 8 shows examples of the device status information and the user status information. It should be understood that the device status information and the user status information are not limited to the cases listed in FIG. 8, and may further include other information. Details are not described herein.

The service recall module may receive the perception information from the fusion perception module, and determine a plurality of candidate applications based on the perception information. For example, the service recall module obtains a user status from the fusion perception module, learns of a use habit of the user based on information such as the user status, and determines, based on the use habit of the user, a plurality of candidate applications (for example, a short video application, a music application, a news application, and a video application in FIG. 6A) that the user wants to use.

The ranking module may rank, according to a display recommendation rule, the plurality of candidate applications determined by the service recall module. For example, as shown in FIG. 6A, the ranking module ranks the plurality of candidate applications such as the short video application, the music application, the news application, and the video application, to obtain a ranking result. For example, based on a use probability of the user, the candidate applications are ranked in descending order as follows: the news application, the music application, the short video application, and the video application.

The display recommendation rule is used to sequentially arrange application icon cards and/or FA cards of the applications based on historical data of using the applications by the user. Optionally, the historical data of using the application by the user includes but is not limited to one or more of the following data: a quantity of historical taps of the user on the application and use duration. For example, an application that is historically used by the user for a larger quantity of times or has longer use duration has a higher ranking location on the display recommendation interface.

The service recommendation module includes a user profile module, an association module, an anti-cheating module, and an overlapping processing module.

A software development kit (software development kit, SDK) may be integrated into the user profile module. The user profile module provides the SDK for a third-party application and the like, and the third-party application may send a user profile of an atomic service of the third-party application to the user profile module through the SDK. The user profile of the atomic service may indicate a habit of using the atomic service by the user.

The user profile of the atomic service may include but is not limited to the following information about historical use of the atomic service by the user: status information of using the atomic service. The status information includes a user status and a device status for using the atomic service. The user status for using the atomic service by the user includes but is not limited to: time at which the user uses the atomic service, a location at which the user uses the atomic service, and a scenario (for example, an environment) in which the user uses the atomic service. The device status for using the atomic service includes but is not limited to: a battery level of the device for using the atomic service by the user, and a signal of the device for using the atomic service by the user. Optionally, that the user uses the atomic service includes but is not limited to: The user taps content related to the atomic service, and the user browses the content related to the atomic service.

Generally, different applications learn use habits of the user in the applications. For example, after the user starts the music application, the music application may display a sad song (for example, an atomic service corresponding to a sad music album) for the user based on a learned use habit of the user. When the user starts the news application, the news application may display entertainment-related news (for example, an atomic service corresponding to entertainment news) for the user based on a learned use habit of the user. In embodiments of this application, use habits of the user that are learned by applications (including the third-party application and a non-third-party application) may be streamlined, a user profile of a user for a corresponding atomic service is obtained from each application, and an atomic service is recommended to the user based on the user profile of the atomic service provided by each application. Specifically, an original application icon card may be replaced with an FA card.

The applications include an original system application and the third-party application. The third-party application may be an application downloaded from an application market.

In a possible implementation, the user profile module may determine whether a first recommendation condition is met, and when determining that the first recommendation condition is met, determine to replace an application icon card of the application with an FA card of a first atomic service.

Optionally, the first recommendation condition includes: a time period in which the first atomic service is recommended, a location of the electronic device for recommending the first atomic service, an environment in which the first atomic service is recommended, a battery level of the electronic device is in a first range, signal strength of the electronic device is in a second range, and the electronic device is connected to a target peripheral device.

In some examples, a user profile of an atomic service indicates a time period for recommending the atomic service of an application. When a corresponding time period is met, the electronic device may recommend, to the user, an atomic service that the user is accustomed to using in the time period.

In some examples, a user profile of an atomic service indicates a location for recommending the atomic service of an application. When the user is located at a corresponding location, the electronic device may recommend, to the user, an atomic service that the user is accustomed to using at the location.

In some examples, a user profile of an atomic service indicates that a "playlist recommendation" service of the music application is recommended on rainy weather. Subsequently, when detecting that it is rainy weather currently, the electronic device may recommend the "playlist recommendation" service to the user.

In some examples, a user profile of an atomic service indicates that an "audio book" service of an audio application is recommended when the battery level is low. Optionally, the "audio book" service may be an atomic service with low power consumption. Subsequently, when the electronic device detects that the battery level is lower than a threshold, the electronic device may recommend the "audio book" service to the user.

In some examples, a user profile of an atomic service indicates that a "local audio" service of an audio application is recommended when the signal of the electronic device is poor. The "local audio" service usually does not require the electronic device to have good network signal quality. Subsequently, when detecting that signal strength is lower than a threshold, the electronic device may recommend the "local audio" service to the user.

In a possible implementation, the first recommendation condition of the first atomic service is determined by a user profile that is of the first atomic service and that is provided by a first application.

When a recommendation condition of an atomic service of the third-party application is met, the user profile module may replace an application icon card of the third-party application with a corresponding FA card based on a user profile of the atomic service, and control the service presentation module to present the corresponding FA card of the atomic service. For example, as shown in FIG. 6A, it is assumed that based on a user profile of a "trend ranking" service of the news application, a recommendation condition of the "trend ranking" service of the news application is that a time period is from 7:00 to 9:00. In this case, at 7:30, when an application icon card of the news application is located in the front of the display recommendation interface, the user profile module of the electronic device may replace the application icon card of the news application with an FA card of the news application based on the user profile of the "trend ranking" service, and control the service presentation module to present related function information of the "trend ranking" service on the FA card. In this way, the electronic device 100 can recommend content related to the "trend ranking" service to the user at an appropriate time, to enrich the recommended content and cause the user to be interested in the recommended atomic service.

Optionally, ranking a plurality of applications may be ranking application icon cards and FA cards of the plurality of applications. FIG. 6A is still used as an example. The electronic device may rank an application icon card of the short video application, an FA card of the short video application, an application icon card of the music application, an FA card of the music application, the application icon card of the news application, the FA card of the news application, an application icon card of the video application, and an FA card of the video application. It is assumed that after ranking, as shown in FIG. 6A, application icon cards or FA cards of the following applications are arranged on the display recommendation interface: the application icon card of the short video application, the application icon card of the music application, the application icon card of the news application, and the application icon card of the video application. The user profile module of the electronic device may replace these applications with corresponding atomic services. For example, the music application (an example of the first application) is replaced with an atomic service. As shown in FIG. 6A, when an application icon card 601 of the music application is ranked on the display recommendation interface, the electronic device may display an FA card 602 of the music application at an arrangement location of the application icon card. In this way, even if the FA card of the music application has a lower ranking location in the ranking of the plurality of applications, the electronic device may replace the application icon card that is of the music application and that has a higher ranking location with the FA card, to recommend the FA card to the user, so that the user can use the FA card more quickly and conveniently, and human-machine interaction efficiency can be improved.

**In** some other examples, it is assumed that after ranking, as shown in FIG. 6B, the application icon card of the music application, the application icon card of the video application, the application icon card of the short video application, and the FA card of the music application are all ranked in the front. In this case, the electronic device may recommend only the FA card of the music application to the user, and no longer recommend the application icon card of the music application to the user.

An application that supports reporting of a user profile may be referred to as an accessed application.

Optionally, a format, a parameter, a representation, a field, and the like of the user profile of the atomic service may be set. For example, FIG. 9 shows user profiles of atomic services of the news application. These user profiles indicate that the user is accustomed to using a "hot news" service of the news application from 7:00 to 9:00, using a "sports news" service of the news application from 9:00 to 12:00, and using an "entertainment news" service of the news application from 17:00 to 19:00.

The format, the parameter, and the like of the user profile are uniformly set, so that user profiles reported by various applications can be standardized, and the user profiles reported by the applications can be easily identified.

The association module may perform association analysis on an application that supports an atomic service but does not support reporting of a user profile of the atomic service, to recommend the atomic service of the application to the user in a corresponding scenario. The application that supports an atomic service but does not support reporting of a user profile of the atomic service is referred to as an unaccessed application. Performing association analysis on the unaccessed application may be: obtaining use information of historical association between an associated application and the first atomic service of the unaccessed application, and determining the first recommendation condition of the first atomic service based on the use information of the historical association.

The use information of the historical association includes but is not limited to: a historical frequency of using the associated application by the user, use duration of using the associated application by the user each time, and a relationship between the associated application and the atomic service of the unaccessed application.

It is considered that the unaccessed application does not support reporting of the user profile, and the electronic device cannot directly obtain the user profile of the unaccessed application. Therefore, to recommend the atomic service of the unaccessed application to the user, and improve human-machine interaction efficiency, an association relationship between a used application (or a used atomic service) and the atomic service of the unaccessed application may be established, and the user profile of the atomic service of the unaccessed application may be determined based on the association relationship. Then, when an application icon card of the unaccessed application has a higher ranking location, the electronic device may replace the application icon card of the unaccessed application with a corresponding FA card based on the user profile of the atomic service of the unaccessed application.

The electronic device may recommend, to the user, the atomic service that is of the unaccessed application and that is associated with the application (or the atomic service).

An application that has been historically used by the user may be an accessed application (an application that supports reporting of a user profile), or may be an unaccessed application (an application that does not support reporting of a user profile). An atomic service that has been historically used by the user may be an atomic service of the accessed application or an atomic service of the unaccessed application.

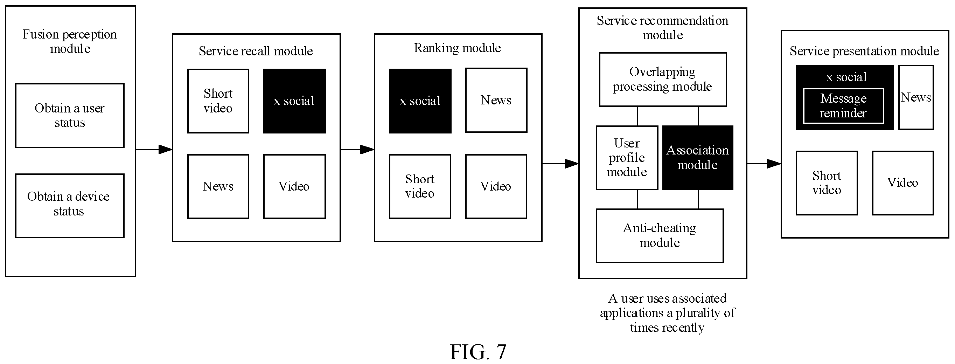

For example, as shown in FIG. 7, the service recall module determines, based on the perception information obtained by the fusion perception module, a plurality of to-be-recommended candidate applications such as the short video application, a social application, the news application, and the video application. Then, based on the plurality of candidate applications determined by the service recall module, the ranking module ranks the plurality of candidate applications. As shown in FIG. 7, the ranking module may perform ranking based on probabilities of using the applications by the user, to obtain that the probabilities of using the applications are a social application x, the news application, the short video application, and the video application in descending order.

Optionally, the service recommendation module may replace an application icon card of each of first n (positive integer) applications in a ranking result with a corresponding FA card. In a possible implementation, when an application icon card of an application 1 has a higher ranking location on the display recommendation interface, the service recommendation module queries the user profile module. If no user profile of the application is found, the service recommendation module determines whether the user has used an associated application or an associated atomic service of the application 1 in a recent period of time. Optionally, the associated application may be an application that has a similar function or an associated function with the unaccessed application. The associated atomic service may be an atomic service that has a similar function or an associated function with an atomic service of the unaccessed application. If the user has used the associated application or the associated atomic service in the recent period of time, the service recommendation module determines that the user probably wants to use one or more atomic services of the application 1. The service recommendation module may replace the application 1 with the one or more corresponding atomic services through the association module. The service presentation module may present FA cards corresponding to the one or more atomic services. Optionally, the associated application may be an application developed by a same development body or an application of a same application type.

For example, as shown in FIG. 7, it is assumed that the social application x does not support reporting of a user profile, but supports an atomic service. After the ranking module ranks the plurality of candidate applications, the social application x is ranked at the top of the plurality of candidate applications. If the service recommendation module determines that the user recently frequently uses message reminder services of a social application y (which may be an accessed application or an unaccessed application) and a social application z, the service recommendation module may determine that the user is accustomed to using a "message reminder" service of the social application. The association module in the service recommendation module may obtain use data of historical association. Based on the use data of the historical association, because a user profile of an atomic service that is uploaded by the social application indicates that the "message reminder" service is a frequently used atomic service, as shown in FIG. 7, when an application icon card of the social application x has a higher ranking location on the display recommendation interface, the association module may replace the application icon card of the social application x with a corresponding FA card. In this way, the electronic device can display the FA card of the "message reminder" service of the social application x at an arrangement location of the application icon card of the social application x, to recommend the "message reminder" atomic service of the social application x to the user. In this way, the user can directly access, through the FA card of the "message reminder" service of the social application x, the "message reminder" service frequently used by the user.

For another example, it is assumed that a music application 5 is an unaccessed application, and the electronic device cannot directly obtain a user profile of each atomic service in the music application 5 from the application. When an application icon card of the music application 5 is arranged on the display recommendation interface, the electronic device may obtain use data of historical association between the music application 5 and a used application, to determine whether a recommendation condition of an FA card of the music application 5 is met. It is determined that the user frequently uses a music application 6 recently. Therefore, the association module considers that a probability of using, by the user in a current time period, a "playlist recommendation" service of the music application 5 associated with the music application 6 is high, and the current time period meets a recommendation condition of the "playlist recommendation" service. Therefore, the association module may replace the application icon card of the music application 5 on the display recommendation interface with an FA card of the "playlist recommendation" service of the music application 5. Subsequently, the service presentation module may present the FA card of the "playlist recommendation" service of the music application 5. In this way, the user can directly access the "playlist recommendation" service through the FA card of the music application 5.

For another example, if the user historically frequently uses the application 1, the electronic device considers that the user is also accustomed to using an FA card of an atomic service 2 of an application 2 (which has an association relationship with the application 1) under a condition (for example, in a recommended time period). In this case, if the current time is in the recommended time period, the electronic device may replace an application icon card of the application 2 on the display recommendation interface with the FA card of the atomic service 2 based on the association relationship between the application 1 and the atomic service 2.

In this solution, an association relationship between a used application or a used atomic service and an atomic service of an unaccessed application is constructed, which is equivalent to streamlining capabilities of learning a user profile of the atomic service by the used application (or the used atomic service) and the unaccessed application. This helps recommend the atomic service of the unaccessed application.

In some embodiments, display sizes of an FA card of an application and an application icon card of the application may be different. In this case, the ranking module may rearrange an application icon card or an FA card of at least one application on the display recommendation interface according to the display recommendation rule, to adapt to a display effect of the FA card of the application on the display recommendation interface.

In a possible implementation, the rearranging an application icon card or an FA card of at least one application on the display recommendation interface according to the display recommendation rule includes: when a display size of an FA card of an application on the display recommendation interface is greater than a display size of an application icon card of the application on the display recommendation interface, skipping arranging application icon cards or FA cards of one or more other applications on the display recommendation interface.

For example, as shown in FIG. 6C, the ranking module determines, through ranking, that the application icon cards or FA cards of the applications on the display recommendation interface are sequentially ranked as follows: the application icon card 601 of the music application, the application icon card of the video application, the application icon card of the short video application, and the application icon card of the news application. It is assumed that a display size (for example, occupying 1*2 grids) of the FA card of the music application on the display recommendation interface is greater than a display size (for example, occupying 1*1 grid) of the application icon card 601 of the music application on the display recommendation interface. In this case, during re-ranking, the ranking module removes application icon cards or FA cards of some applications that have lower ranking locations from the display recommendation interface. For example, as shown in FIG. 6C, the ranking module re-ranks the application icon card 601 of the music application, the application icon card of the video application, the application icon card of the short video application, and the application icon card of the news application. Because the application icon card of the news application has a lower arrangement location, the application icon card of the news application is preempted by the to-be-displayed FA card of the music application. Therefore, the application icon card of the news application is no longer arranged on a display recommendation interface 603. Optionally, after the re-ranking, an arrangement location of the application icon card 601 of the music application on the display recommendation interface changes from occupying 1*1 grid to occupying 1*2 grids.

The anti-cheating module may calculate confidences of to-be-recommended atomic services, perform filtering on the to-be-recommended atomic services based on the confidences of the atomic services, and remove an atomic service with a lower confidence from the to-be-recommended atomic services. The confidence may indicate a reliability level of using the atomic service by the user, and the confidence may be understood as an actual probability of using the atomic service by the user. A high confidence indicates a high reliability level of using the atomic service by the user or a high probability or frequency of using the atomic service by the user. On the contrary, a low confidence indicates a low reliability level of using the atomic service by the user or a low probability or frequency of using the atomic service by the user. For example, it is assumed that the music application reports user profiles corresponding to atomic services such as "playlist recommendation", "daily recommendation", "private radio", "audio book", and "live broadcast". The anti-cheating module may calculate confidences of the atomic services based on user profiles of the atomic services. Through calculation, confidences of the "audio book" service and the "live broadcast" service are low, which means that the user does not frequently tap and use the "audio book" service and the "live broadcast" service. The anti-cheating module may remove the "audio book" service and the "live broadcast" service from the to-be-recommended atomic services based on the user profiles. In addition, the electronic device 100 does not recommend the "audio book" service or the "live broadcast" service to the user this time.

In this way, a feedback operation (for example, an actual tap on an atomic service) of the user can be fully used, and an atomic service that is not actually operated by the user or that has a low operation probability is removed, to avoid a cheating behavior like recommending some unpopular atomic services by the third-party application, and avoid recommending an atomic service that the user is not interested in to the user.

The electronic device 100 may dynamically calculate a confidence of each atomic service, and subsequently, when the user has an intention of using a corresponding atomic service, recommend the corresponding atomic service to the user. For example, the music application is still used as an example. In a scenario, a confidence of the "audio book" service is low, and the electronic device 100 does not recommend the "audio book" service to the user. In another scenario, a confidence of the "audio book" service is high, and the electronic device 100 may recommend the "audio book" service to the user.

The overlapping processing module may perform overlapping scenario processing after the user profile module or the association module performs preliminary replacement on the atomic service.

For example, user profiles of one or more candidate applications may be obtained from the user profile module, and one application may include one or more candidate atomic services. When user profiles of the candidate atomic services overlap or conflict, the candidate atomic services are re-ranked. For example, if the user profiles reported by the music application indicate that the user is accustomed to using the "daily recommendation" service of the music application from 7:00 to 9:00, and is accustomed to using the "playlist recommendation" service of the music application from 7:00 to 9:00. It is considered that both the two atomic services may be displayed in the period from 7:00 to 9:00, that is, when both a first recommendation condition of the "playlist recommendation" service and a second recommendation condition of the "daily recommendation" service are met, in this embodiment of this application, the two atomic services may be ranked, to determine an atomic service that needs to be preferentially recommended to the user.

For another example, the overlapping processing module may obtain, from the association module, candidate atomic services obtained through preliminary replacement, and re-rank the candidate atomic services, to determine an atomic service that needs to be preferentially recommended to the user.

In a possible implementation, that the overlapping processing module ranks the atomic services may be implemented as follows: First, a preliminary score of each atomic service is calculated based on a quantity of historical taps of the user on each atomic service. Optionally, a larger quantity of historical taps of the user indicates a higher preliminary score of the atomic service. On the contrary, a smaller quantity of historical taps of the use indicates a lower preliminary score of the atomic service. Then, the preliminary score of the atomic service and a user profile of the atomic service may be input into a reward and punishment model, and the reward and punishment model outputs a reward and punishment score of the atomic service. Optionally, the electronic device 100 may determine a display location of content of each atomic service on the interface based on the reward and punishment score of each atomic service. Optionally, an atomic service with a high reward and punishment score is displayed at a front location on the interface, to increase a probability that the user taps and uses the atomic service with the high reward and punishment score.

The service presentation module may be configured to present FA cards of one or more atomic services. An FA card presentation manner includes but is not limited to a manner of popping up a notification, popping up a card, or the like.

Optionally, the electronic device shown in FIG. 6A, FIG. 6B, and FIG. 7 is merely an example. The electronic device may further include more or fewer components than those shown in the figure, or some components may be combined, or some components may be split, or different component arrangements may be used. The components shown in the figure may be implemented by hardware, software, or a combination of software and hardware. For example, some modules may alternatively be located in the server 200. For example, the user profile module may be located in the server 200. An application may report a user profile of each atomic service to the server 200. Subsequently, the electronic device 100 may obtain the user profile of each atomic service from the server 200, to recommend a corresponding FA card to the user.

The following describes in detail the technical solutions provided in embodiments of this application with reference to the accompanying drawings by using an example in which the electronic device 100 is a mobile phone.

In some embodiments of this application, the mobile phone may recommend an atomic service or an application to a user through a Celia suggestion, a service center, or the like. For example, the atomic service or the application is recommended to the user through the Celia suggestion. For example, in (a) in FIG. 10A, at a moment t1 (for example, 6:30), the mobile phone displays a desktop 10, the desktop 10 includes a Celia suggestion card 1001, and the card 1001 is used to present a "recommended service". The recommended service may be an application, an atomic service, or a function. For example, in (a) in FIG. 10A, the card 1001 includes application icon cards of a gallery application, a browser application, a news application, an AI life application, and a music application. A user A may quickly find, through the card 1001, an atomic service that the user A wants to use, and does not need to select the atomic service from massive services on the desktop. This greatly improves efficiency of interaction between the user A and the mobile phone. As shown in (a) in FIG. 10A, the user A may tap the application icon card of the gallery application on the card 1001. The mobile phone starts the gallery application in response to the operation of the user A, and may display a main interface 20 of the gallery application shown in (b) in FIG. 10A. The user A may browse pictures in the gallery application.

In this embodiment of this application, the mobile phone may further replace an application like the news application with a corresponding atomic service, and recommend an FA card of the atomic service to the user. In a possible implementation, the mobile phone may obtain user profiles corresponding to one or more atomic services on the mobile phone, and determine, based on the user profiles of the one or more atomic services, the atomic service that the user A wants to use.

The user profile includes but is not limited to any one or more of the following profile information: a user status for using an atomic service, a device status for using the atomic service, and information about the used atomic service. The user status for using the atomic service by the user includes but is not limited to: time at which the user uses the atomic service, a location at which the user uses the atomic service, and a scenario (for example, an environment) in which the user uses the atomic service. The device status for using the atomic service includes but is not limited to: a battery level of the device for using the atomic service by the user, and a signal of the device for using the atomic service by the user. Optionally, that the user uses the atomic service includes but is not limited to: The user taps content related to the atomic service, and the user browses the content related to the atomic service.

Optionally, the time at which the user uses the atomic service includes but is not limited to: time at which the user is accustomed to using the atomic service, and optimal time for the user to use the atomic service.

The information about the atomic service includes but is not limited to a quantity of times that function information of an FA card corresponding to the atomic service is tapped and a quantity of times that the FA card corresponding to the atomic service is exposed.

For example, the user profile is time at which the user A uses the atomic service. As shown in FIG. 9, the news application may provide a plurality of atomic services such as a hot news service, a sports news service, and an entertainment news service. The user A may browse hot news through the hot news service of the news application, browse sports news through the sports news service, and browse entertainment news through the entertainment news service. The news application may collect statistics on a habit of using the atomic services of the news application by the user A, and may send the following user profiles to a user profile module: {hot news 7:00 to 9:00; sports news 9:00 to 12:00; entertainment news 17:00 to 19:00}. The user profiles indicate that the user A is accustomed to searching for and browsing the hot news from 7:00 to 9:00, and correspondingly, in the period from 7:00 to 9:00, atomic services that are in the news application and that the user A is interested in include the "hot news" service; the user A is accustomed to searching for and browsing the sports news from 9:00 to 12:00, and correspondingly, in the period from 9:00 to 12:00, atomic services that are in the news application and that the user A is interested in include the "sports news" service; and the user A is accustomed to searching for and browsing the entertainment news from 17:00 to 19:00, and correspondingly, in the period from 17:00 to 19:00, atomic services that are in the news application and that the user A is interested in include the "entertainment news" service.

After obtaining the user profiles corresponding to the atomic services in the news application, the user profile module may determine, based on the user profiles corresponding to the atomic services in the news application, a news application service that the user A wants to use in a corresponding scenario.

For example, at a moment t2 (for example, 7:31), the mobile phone receives an operation of exiting the gallery application by the user A, and determines that the user wants to control the mobile phone to jump back to the desktop. In this case, the mobile phone needs to determine an atomic service and/or an application recommended to the user on the Celia suggestion card on the desktop. In some examples, the mobile phone first determines a plurality of to-be-recommended candidate applications based on a use habit or another factor of the user A, and ranks the plurality of candidate applications. For example, as shown in (c) in FIG. 10A, the plurality of candidate applications include the news application, the gallery application, the AI life application, the music application, a video application, and the browser application, and are sequentially ranked as follows: the news application, the gallery application, the AI life application, the music application, the video application, and the browser application.

Optionally, the mobile phone may replace some applications in the plurality of candidate applications with one or more atomic services, and present FA cards of the one or more atomic services. For example, the mobile phone replaces the news application ranked first with a corresponding atomic service. The mobile phone obtains a candidate atomic service that is in the news application and that the user A is interested in. For example, the mobile phone obtains, based on a user profile reported by the news application shown in FIG. 9, that the user A is accustomed to using the "hot news" service at the moment t2 (from 7:00 to 9:00). Then, the mobile phone replaces the news application with the "hot news" service, and presents, on the Celia suggestion card 1002 on the desktop, an FA card 1003 corresponding to the "hot news" service, as shown in (c) in FIG. 10A. Content related to the "hot news" service is displayed on the FA card 1003.

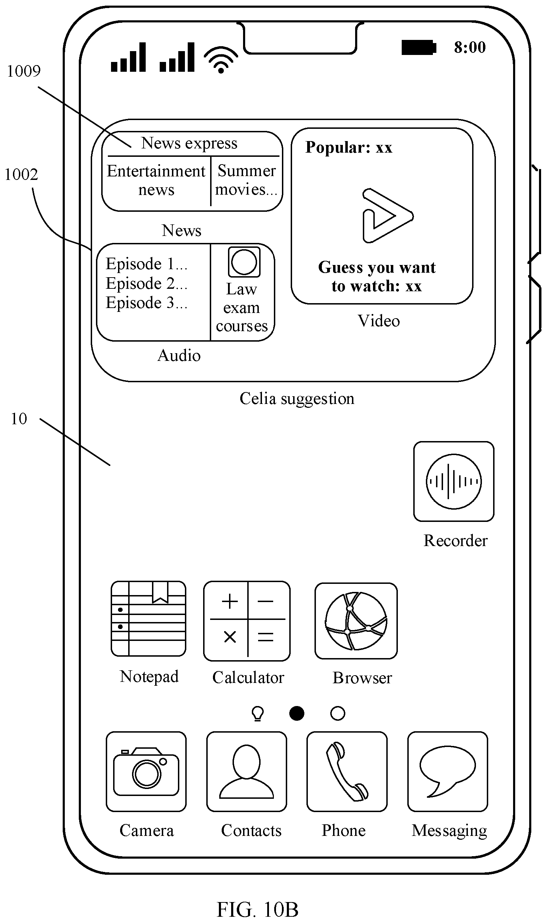

Similarly, according to the same method, the mobile phone may replace another candidate application in the plurality of candidate applications with a corresponding atomic service, and recommend an FA card of the corresponding atomic service to the user. For example, as shown in FIG. 10B, an FA card 1009 of the news application, an FA card of the video application, and an FA card of an audio application are presented on the Celia suggestion card 1002 on the desktop 10 of the mobile phone. It can be learned that, according to the technical solutions in embodiments of this application, efficiency of replacing an application with an atomic service can be improved, so that the user can quickly use the corresponding atomic service, and human-machine interaction efficiency can be improved.

Optionally, for another application that is not replaced with an atomic service, the mobile phone may directly present an application icon card of the corresponding application on the Celia suggestion card 1002 on the desktop. For example, as shown in (c) in FIG. 10A, the mobile phone presents application icon cards of the gallery application, the AI life application, the music application, the video application, and the browser application on the Celia suggestion card 1002 on the desktop.

Still as shown in (c) in FIG. 10A, after detecting that the user A taps the FA card 1003 of the news application, the mobile phone may directly jump to a page 30 corresponding to the "hot news" service shown in (d) in FIG. 10A. The user A does not need to start the news application and then manually control the mobile phone to jump to an interface corresponding to the "hot news" service.

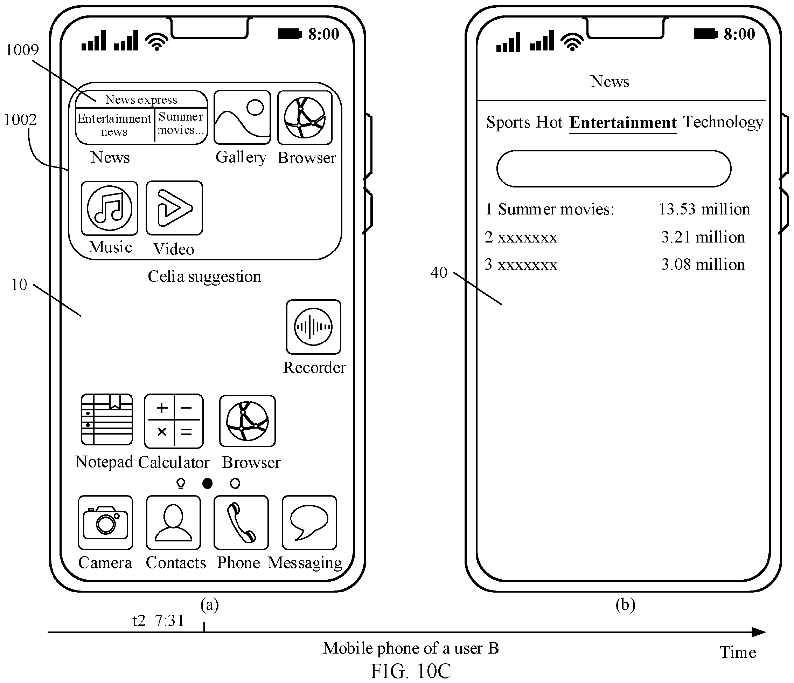

The foregoing mainly uses an example in which the mobile phone recommends the atomic service to the user A. For different users, different electronic devices may recommend personalized atomic services to the users in a targeted manner based on user profiles of using the atomic services by the users. For example, user profiles of using atomic services in the news application by a user B are as follows: {entertainment news 7:00 to 8:30; sports news 12:00 to 12:30; hot news 18:00 to 18:30}. The user profiles indicate that the user B is accustomed to searching for and browsing the entertainment news from 7:00 to 8:30, and correspondingly, in the period from 7:00 to 8:30, atomic services that are in the news application and that the user B is interested in include the "entertainment news" service; the user B is accustomed to searching for and browsing the sports news from 12:00 to 12:30, and correspondingly, in the period from 12:00 to 12:30, atomic services that are in the news application and that the user B is interested in include the "sports news" service; and the user B is accustomed to searching for and browsing the hot news from 18:00 to 18:30, and correspondingly, in the period from 18:00 to 18:30, atomic services that are in the news application and that the user B is interested in include the "hot news" service. The user profile module may determine, based on the user profiles corresponding to the atomic services in the news application, a news application service that the user B wants to use in a corresponding scenario. For example, as shown in (a) in FIG. 10C, the user turns on a screen of the mobile phone at 7:31, and the mobile phone may present the FA card 1009 of the news application on the Celia suggestion card 1002 on the desktop. Content related to the "entertainment news" service, for example, "introduction information of summer movies", may be presented on the FA card 1009. When detecting that the user taps the FA card 1009, the mobile phone may directly jump to an interface 40 corresponding to the "entertainment news" service shown in (b) in FIG. 10C.

Optionally, the mobile phone may further present an application icon card of another application on the Celia suggestion card 1002 on the desktop. For example, as shown in (a) in FIG. 10C, the mobile phone presents application icon cards of the gallery application, the browser application, the music application, and the video application on the Celia suggestion card 1002. In response to tapping an application icon card of an application by the user, the mobile phone may jump to a main interface of the application, or jump to an interface presented by the application when the application is exited last time.

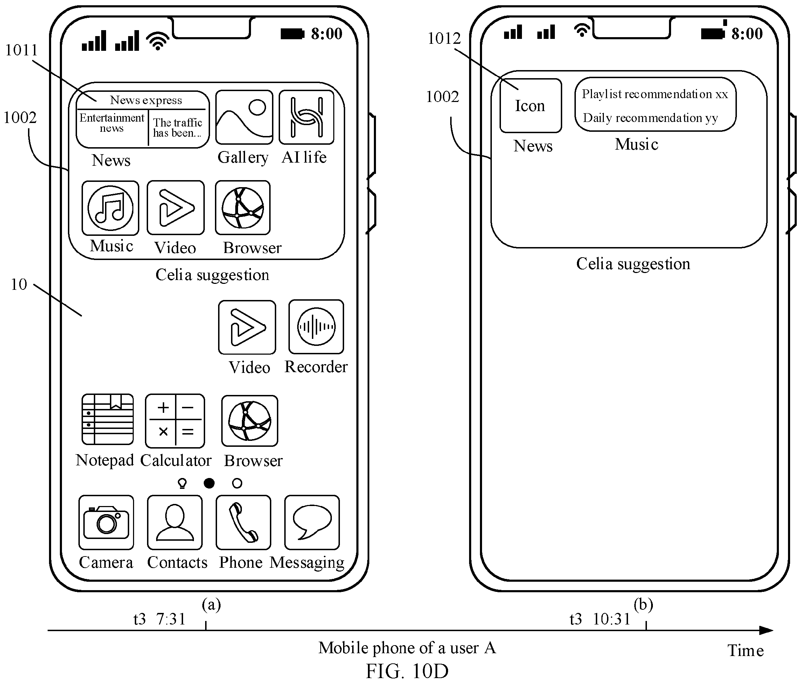

The foregoing mainly uses an example in which the user profile reported by the application includes user profiles of a plurality of atomic services. In a scenario, the user profile reported by the application may include a user profile of only one atomic service. In this case, the electronic device may present an FA card of the atomic service to the user based on the user profile of the atomic service, so that the user can directly access the atomic service, and human-machine interaction efficiency can be improved. For example, it is assumed that, in a scenario, a user profile reported by the news application is as follows: {entertainment news 7:00 to 8:30}, which means that the user is accustomed to using the "entertainment news" service in the period from 7:00 to 8:30. Subsequently, as shown in (a) in FIG. 10D, when an FA card is recommended to the user at 7:31, the electronic device may present an FA card 1011 of the "entertainment news" service on the Celia suggestion card 1002 on the desktop. In this way, the user can quickly and conveniently find the FA card of the "entertainment news" service on the Celia suggestion card based on a daily use habit in the period from 7:00 to 8:30, and tap the FA card for use. This improves human-machine interaction efficiency. Then, as shown in (b) in FIG. 10D, at 10:31, because a time period recommendation condition for the atomic service of the news application is not met, the electronic device may directly present an application icon card 1012 of the news application on the Celia suggestion card 1002, instead of replacing the application icon card 1012.

In the foregoing solution, an FA card of a third-party application is presented on the desktop. The FA card of the third-party application can provide a more atomic service, and intuitively display more detailed and specific service content that the user is interested in, so that interaction of the user can be fully aroused. In addition, the user may directly access service content related to "hot news" of the third-party application through the FA card 1003 presented on the Celia suggestion card 1002, so that the user can quickly obtain the atomic service that the user wants to use. This improves human-machine interaction efficiency.

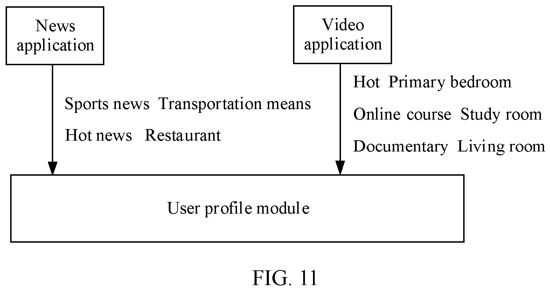

For another example, the user profile is the location at which the user uses the atomic service. The applications on the mobile phone may calculate a location at which the user is located when the user uses each atomic service, and send, to the user profile module, location information corresponding to each atomic service. As shown in FIG. 11, user profiles sent by the video application to the user profile module include: {popular service: primary bedroom; online course service: study room; documentary: living room}. These user profiles indicate that the user is accustomed to using the "popular" service of the video application in the primary bedroom, using the "online course" service in the study room, and using the "documentary" service of the video application in the living room. User profiles sent by the news application to the user profile module include: {sports news service: transportation means; hot news service: restaurant}. These user profiles indicate that the user is accustomed to browsing sports news by using the "sports news" service of the news application in the transportation means like a subway or a bus, and browsing hot news by using the "hot news" service in a leisure place like the restaurant.

Subsequently, the mobile phone may recommend, to the user based on a user profile of each atomic service in the news application and the video application, an atomic service that the user wants to use at a corresponding location.

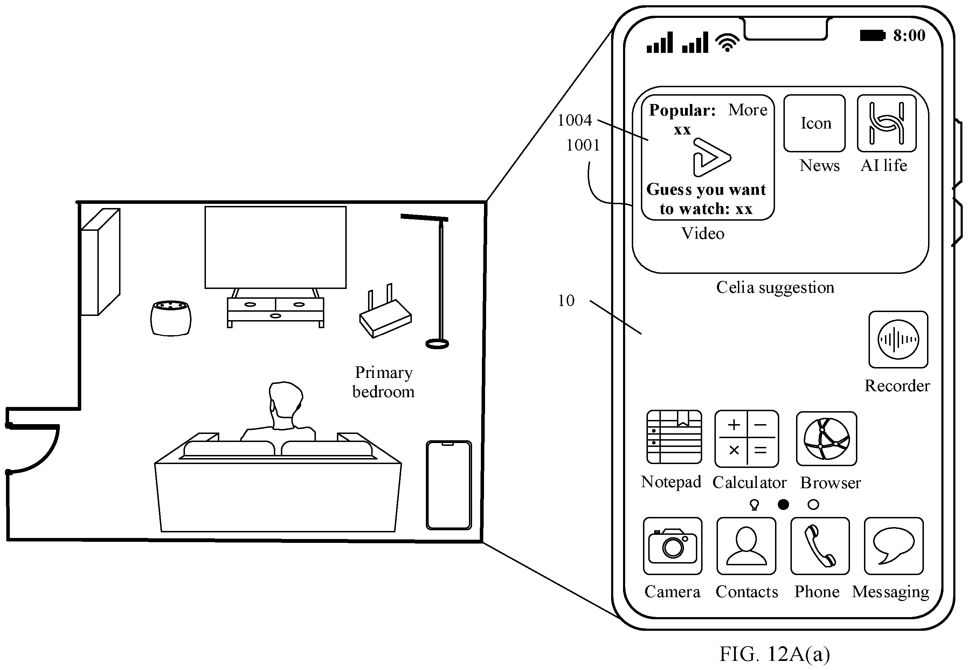

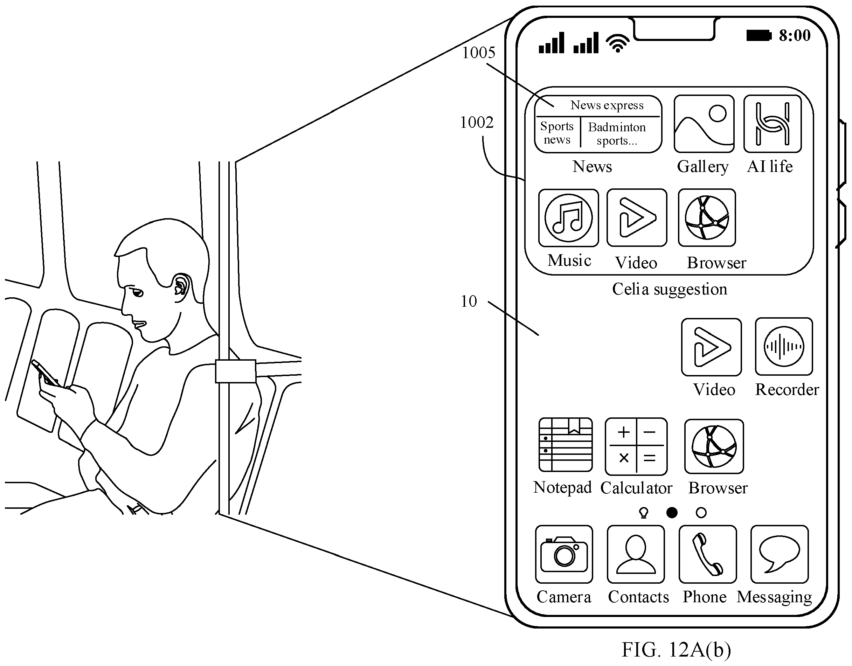

For example, as shown in FIG. 12A(a), when the user is in the primary bedroom, if the user turns on the screen of the mobile phone, the mobile phone may present an FA card 1004 of the video application on the Celia suggestion card 1001 on the desktop 10. The FA card 1004 may include content of the "popular" service, for example, include an introduction to a "popular" episode, and include a "more" option for more popular episodes. In this way, when the user is at a corresponding physical location, the mobile phone can recommend, to the user, an atomic service that conforms to the use habit of the user. This helps reduce difficulty in searching for an application or the atomic service by the user, shorten time used by the user to find the atomic service, and improve human-machine interaction efficiency.

For another example, as shown in FIG. 12A(b), when the user is on the subway, if the user controls the mobile phone to jump to the desktop, the mobile phone may present an FA card 1005 of the news application on the Celia suggestion card 1002 on the desktop 10. In this way, when the mobile phone is at a corresponding geographical location, the mobile phone may present an FA card that the user is accustomed to using at the geographical location, to assist the user in quickly finding a desired atomic service.

For another example, when detecting that the user is near a subway entrance, the mobile phone may recommend an FA card of a traffic application to the user. The FA card may present content such as a passenger code, so that the user quickly scans the passenger code to enter a station.

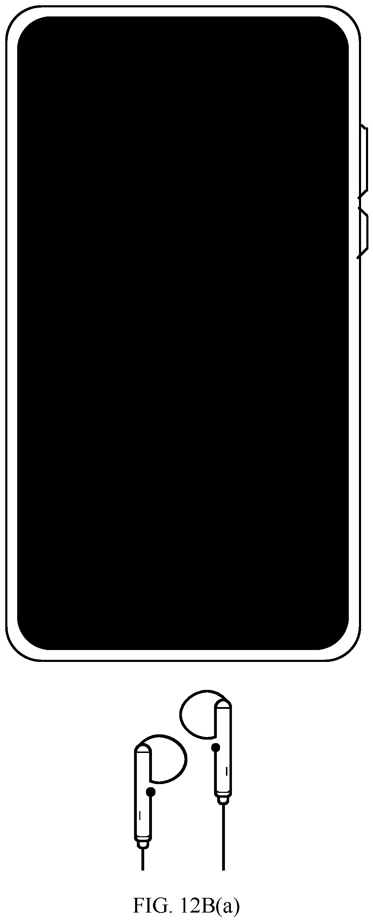

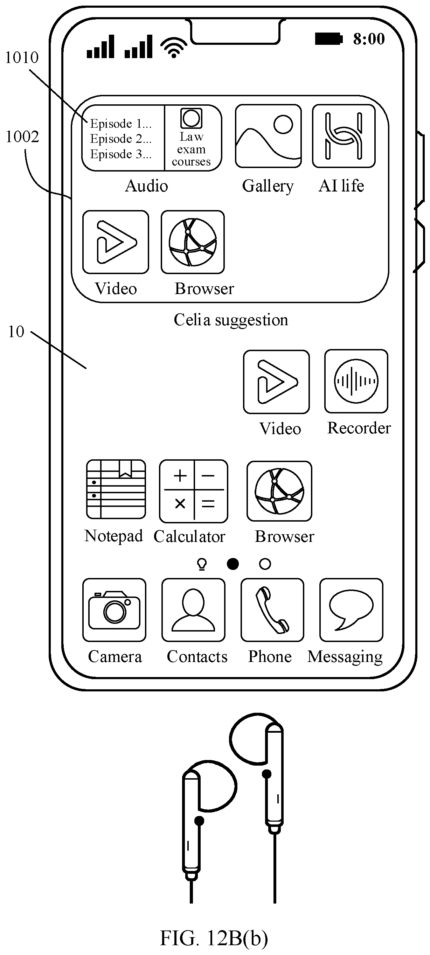

For another example, the user profile is the device status for using the atomic service by the user. The applications on the mobile phone may calculate a device status for using each atomic service by the user, and send, to the user profile module, a user profile corresponding to each atomic service. It is assumed that the user profile indicates that the user is accustomed to playing an "online course" through the audio application after the mobile phone is connected to a headset. For example, as shown in FIG. 12B(a), the screen of the mobile phone is locked, and it is detected that the mobile phone is connected to the headset. In this case, when it is detected that the user turns on the screen, as shown in FIG. 12B(b), the mobile phone may present, on the Celia suggestion card 1002 on the desktop, an FA card 1010 of the "online course" service of the audio application, and courses such as law exams and related episodes may be presented on the FA card 1010.

In the foregoing solution, the mobile phone may accurately predict, based on a user profile of an atomic service reported by a third-party application, an atomic service that the user wants to use and that meets the use habit of the user, and recommend, to the user, an atomic service that is frequently used by the user. Because the recommended atomic service is an atomic service that the user wants to use with a high probability, a probability that the user taps the atomic service can be improved, and human-machine interaction experience can be improved.

The foregoing mainly uses an example in which the third-party application supports reporting of a user profile to the user profile module for description. In some other embodiments, the third-party application may alternatively be an application that does not support reporting of a user profile. The third-party application that supports reporting of a user profile to the user profile module may be referred to as an accessed application, and the third-party application that does not support reporting of a user profile may be referred to as an unaccessed application.

In some embodiments, the mobile phone may obtain a historical operation record of the user on a used application or a used atomic service, and recommend, to the user based on the historical operation record of the user on the used application or the used atomic service and an association relationship between the used application (or the used atomic service) and an atomic service of an unaccessed application, an atomic service that is of the unaccessed application and that the user wants to use. The used application may be an accessed application or an unaccessed application. The used atomic service may be an atomic service of the accessed application or an atomic service of the unaccessed application.

An operation of the user on an application or an atomic service includes but is not limited to tapping the application or tapping the atomic service.

For example, it is assumed that travel applications are applications that have an association relationship with each other. A travel application x, a travel application y, and a travel application z are installed on the mobile phone. The travel application y is an unaccessed application and does not support reporting of a user profile.

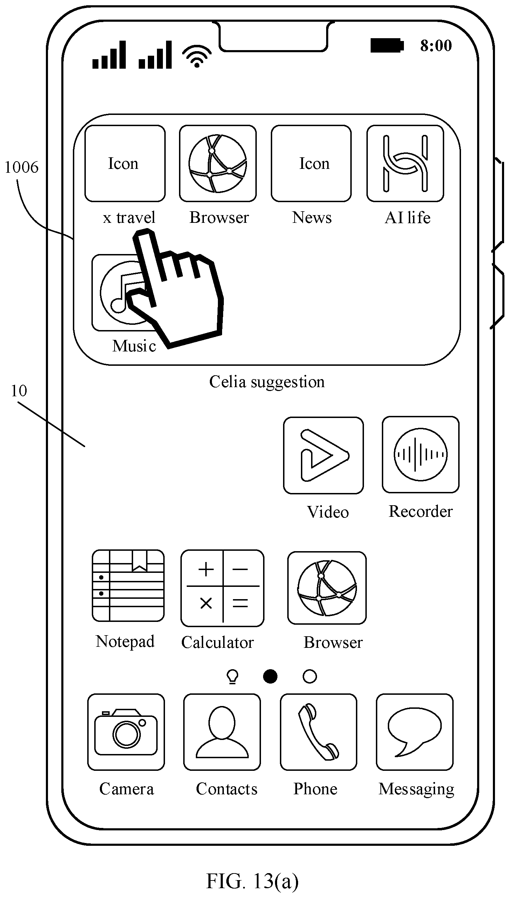

As shown in FIG. 13(a), the mobile phone presents an application icon card of the travel application x on a Celia suggestion card 1006 on the desktop 10. The user taps and starts the travel application x, uses a "hot holidays" service of the travel application x to search for and browse a hot resort in a current season, and uses a "scenic spot guide" service to search for and browse a travel guide of a corresponding scenic spot. The travel application x may report a user profile to the user profile module of the mobile phone through an SDK provided by the mobile phone.

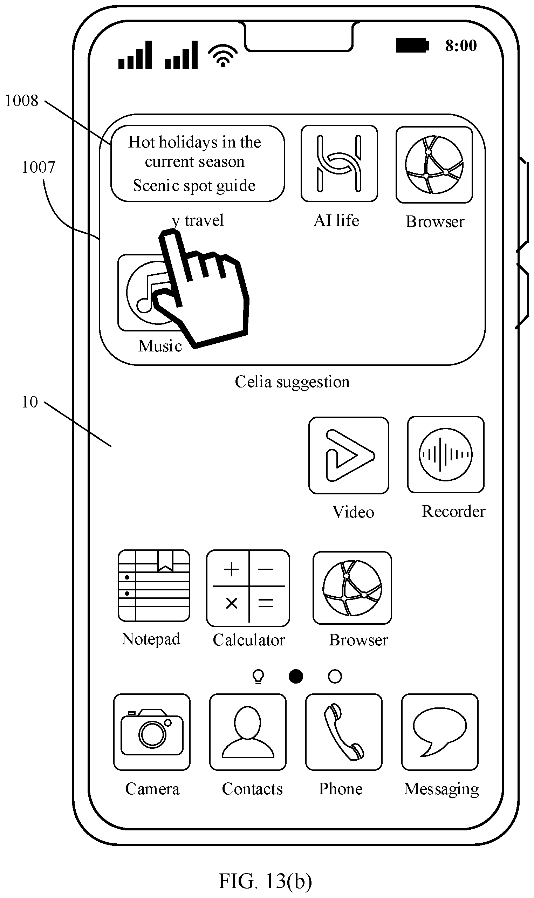

Then, as shown in FIG. 13(b), when the user controls the mobile phone again to enter the desktop, it is assumed that an application icon card of the travel application y is arranged in the front of a display interface. In this case, the mobile phone may determine whether a recommendation condition of an atomic service of the travel application y is met. It is determined that the user frequently uses the travel application x recently, and when using the travel application x, the user usually also taps a "hot holidays in the current season" service and a "scenic spot guide" service of the travel application y. In this case, the mobile phone considers that a probability that the user uses, in a current time period, the "hot holidays in the current season" service and the "scenic spot guide" service of the travel application y associated with the travel application x is high. Therefore, the mobile phone may present an FA card 1008 on a Celia suggestion card 1007. As shown in FIG. 13(b), function information of the "hot holidays in the current season" service and the "scenic spot guide" service of the travel application y is presented on the FA card 1008.

The foregoing mainly uses an example in which associated applications are applications with a similar function. In some other embodiments, the associated applications may alternatively be applications having another association relationship. For example, a fitness application is an unaccessed application, and it is detected that the user frequently uses the news application to search for "health recipes" recently. In this case, the mobile phone may recommend an FA card of the fitness application to the user, and present content related to a "health recipes" service on the FA card.

In this solution, it is considered that in a scenario in which the user historically frequently uses a type of application or atomic service, and there is a high probability that the user taps and uses a similar atomic service or an atomic service associated with the application or the atomic service. Therefore, content of the atomic service in the application can be directly presented to the user, so that the user can directly access the content of the atomic service in the application.

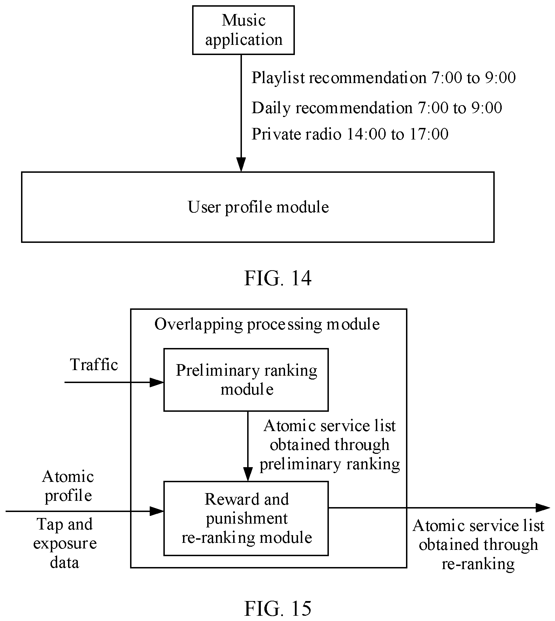

An embodiment of this application further provides a service recommendation method. In some cases, user profiles reported by the third-party application overlap. For example, in FIG. 14, user profiles of a "playlist recommendation" service and a "daily recommendation" service of the music application overlap, and both indicate that service recommendation is performed in the period from 7:00 to 9:00. In this case, in a possible implementation, the mobile phone may re-rank atomic services whose user profiles overlap, to determine an atomic service that finally needs to be recommended.

In a possible implementation, a profile overlapping processing module includes a preliminary ranking module and a reward and punishment re-ranking module. As shown in FIG. 15, the preliminary ranking module may preliminarily rank to-be-recommended atomic services according to a rule like natural traffic tapping. Then, the preliminary ranking module sends a preliminary ranking result to the reward and punishment re-ranking module, and the reward and punishment re-ranking module may re-rank the plurality of to-be-recommended atomic services in the preliminary ranking result by using a reward and punishment model, to obtain a final ranking result.

Optionally, natural traffic of an atomic service may be determined based on a parameter of a tap operation of the user on the atomic service in a historical period of time. For example, historically, a larger quantity of taps on an atomic service by the user indicates higher natural traffic of the atomic service. The tap operation may be a tap of the user on the atomic service at any moment in an entire day.

Optionally, training samples of the reward and punishment model include tap data of the user on an FA card corresponding to the atomic service, exposure data of the atomic service, a user profile of the atomic service, and a preliminary score of the atomic service. Subsequently, the reward and punishment model may be used to perform reward and punishment scoring on the atomic service.

Exposure of the atomic service means that the atomic service is presented or published to the user. Generally, the atomic service is more exposed to the user, helping increase a probability that the user taps the atomic service. For example, as shown in (c) in FIG. 10A, each time the mobile phone presents an FA card of the "hot news" service on the Celia suggestion card 1001 may be referred to as one time of exposure of the "hot news" service.

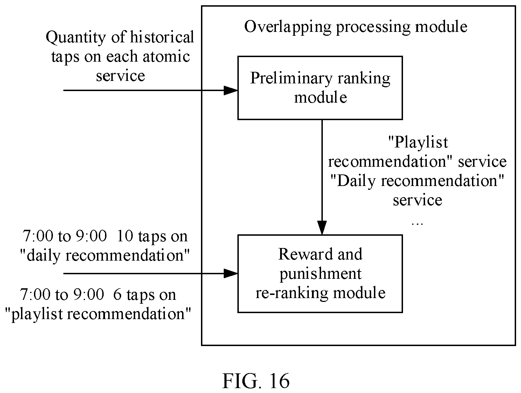

For example, overlapping processing is performed on candidate atomic services of the to-be-recommended music application. As shown in FIG. 14, atomic services of the music application include the "daily recommendation" service, the "playlist recommendation" service, and a "private radio" service. A user profile of the "playlist recommendation" service and a user profile of the "daily recommendation" service overlap in terms of time. As shown in FIG. 16, the preliminary ranking module may obtain quantities of historical taps of the user on the "playlist recommendation" service and the "daily recommendation" service, and preliminarily score the "playlist recommendation" service and the "daily recommendation" service based on the quantities of historical taps. After scoring, it is assumed that a quantity of historical taps on the "playlist recommendation" service is greater than a quantity of historical taps on the "daily recommendation" service. In this case, a preliminary score of the "playlist recommendation" service is higher than a preliminary score of the "daily recommendation" service. The preliminary ranking module may transfer the preliminary scores of the "playlist recommendation" service and the "daily recommendation" service to the reward and punishment re-ranking module.

After obtaining the preliminary scores of the "playlist recommendation" service and the "daily recommendation" service, the reward and punishment re-ranking module may obtain a user profile {playlist recommendation: 7:00 to 9:00} of the "playlist recommendation" service. The user profile of the "playlist recommendation" service includes but is not limited to the following information: a quantity of taps on the "playlist recommendation" service from 7:00 to 9:00 and a quantity of times of exposure of the "playlist recommendation" service from 7:00 to 9:00. The reward and punishment re-ranking module may input the user profile of the "playlist recommendation" service and the preliminary score of the "playlist recommendation" service into the reward and punishment model, and the reward and punishment model outputs a reward and punishment score of the "playlist recommendation" service. A reward and punishment score of an atomic service may indicate a probability that the atomic service is used by the user. A higher probability that the atomic service is used by the user indicates a higher reward and punishment score. On the contrary, a lower probability that the atomic service is used by the user indicates a lower reward and punishment score.

Similarly, the reward and punishment re-ranking module may obtain a user profile {daily recommendation: 7:00 to 9:00} of the "daily recommendation" service, a quantity of taps on the "daily recommendation" service from 7:00 to 9:00, and a quantity of times of exposure of the "daily recommendation" service from 7:00 to 9:00, and input the data and the preliminary score of the "daily recommendation" service into the reward and punishment model, and the reward and punishment model outputs a reward and punishment score of the "daily recommendation" service.

In some examples, the FA card presented by the mobile phone includes content related to a plurality of atomic services. For example, if the reward and punishment score of the "playlist recommendation" service of the music application is higher than the reward and punishment score of the "daily recommendation" service, the mobile phone may replace the music application with an atomic service (for example, the "playlist recommendation" service or the "daily recommendation" service) of the music application. In addition, as shown in FIG. 17, the mobile phone may present the FA card 1008 of one or more atomic services of the music application on the Celia suggestion card 1007 on the desktop. The FA card 1008 may include content of the "playlist recommendation" service and the "daily recommendation" service. For example, the FA card 1008 may include an introduction to a song in a recommended playlist and the like. Optionally, related content of the playlist recommendation service is displayed in front of related content of the daily recommendation service.

In some other examples, the FA card presented by the mobile phone includes related content of an atomic service with a highest reward and punishment score in an application. For example, if the reward and punishment score of the "playlist recommendation" service of the music application is higher than the reward and punishment score of the "daily recommendation" service, the mobile phone may present the FA card of the music application on the Celia suggestion card 1007 on the desktop. The FA card may include the related content of the "playlist recommendation" service.

The foregoing uses an example in which the overlapping processing module re-ranks the overlapping atomic services by performing two steps: preliminary scoring and reward and punishment scoring. In some other embodiments, if atomic services overlap, the overlapping processing module may directly use the reward and punishment model to calculate reward and punishment scores of the atomic services, and determine a recommendation priority of each atomic service based on the reward and punishment scores of the atomic services. For example, user profiles of the atomic services of the music application are as follows: {daily recommendation: 7:00 to 9:00; playlist recommendation: 7:00 to 9:00; private radio: 17:00 to 19:00}. The daily recommendation service and the playlist recommendation service overlap in terms of time. The overlapping processing module may obtain quantities of taps on the daily recommendation service and the playlist recommendation service and quantities of times of exposure of the daily recommendation service and the playlist recommendation service in the period from 7:00 to 9:00, and input a quantity of taps on the daily recommendation service, a quantity of taps on the playlist recommendation service, a quantity of times of exposure of the daily recommendation service, and a quantity of times of exposure of the playlist recommendation service into the reward and punishment model, and the reward and punishment model outputs reward and punishment scores. An atomic service with a higher reward and punishment score has a higher recommendation priority. The mobile phone may display an atomic service with a high recommendation priority in the front of the FA card.

The mobile phone may alternatively calculate, in another manner, the reward and punishment scores of the atomic services that overlap, to determine display locations, display effects, and the like of the atomic services on the FA card, and display an atomic service with a higher recommendation priority in a front location of the FA card, so as to attract attention of the user and improve human-machine interaction efficiency.

For example, the mobile phone may further calculate duration of using the atomic service by the user, and determine a reward and punishment score of the atomic service based on the duration and a quantity of historical taps of the user.

An embodiment of this application further provides a service recommendation method. It is considered that each application expects to recommend more atomic services of the application. Therefore, the application may have a cheating behavior. For example, the third-party application fabricates a user profile of an atomic service, to deceive a mobile phone to recommend the atomic service. To avoid the cheating behavior of the third-party application and avoid recommending an inappropriate atomic service, the mobile phone may perform confidence scoring on the atomic service of the application, to remove an atomic service having a low confidence, and avoid recommending, to the user, the atomic service that has the low confidence and that the user does not want to use.

In a possible implementation, an anti-cheating module may obtain a user profile of the atomic service from the user profile module, and calculate a confidence of the atomic service based on the user profile. The confidence indicates a reliability level of using the atomic service by the use

Optionally, the anti-cheating module may obtain, based on the user profile of using the atomic service by the user, a quantity of historical taps on an FA card corresponding to the atomic service and a quantity of times of historical exposure of the FA card corresponding to the atomic service, and use a ratio of the quantity of historical taps to the quantity of times of historical exposure as a confidence (or referred to as a click-through rate) of the atomic service. The confidence of the atomic service may indicate an actual probability of using the atomic service by the user. A lower confidence of the atomic service means that the exposed atomic service is not actually tapped by the user, or a quantity of actual taps of the user is extremely low, and a probability that the atomic service is actually used by the user is low. In this case, the user actually does not want to use the atomic service, or a probability that the user uses the atomic service is low. The mobile phone may not recommend the atomic service to the user. Alternatively, when the confidence of the atomic service is low, the mobile phone may replace an application icon card of the application with a corresponding FA card, and display the FA card, but time for displaying the FA card is reduced.

On the contrary, a higher confidence indicates a larger quantity of actual taps of the user on the exposed atomic service. In this case, the user actually wants to use the atomic service, or a probability that the user uses the atomic service is high, and a probability that the atomic service is actually used by the user is high. The mobile phone may recommend the atomic service to the user.

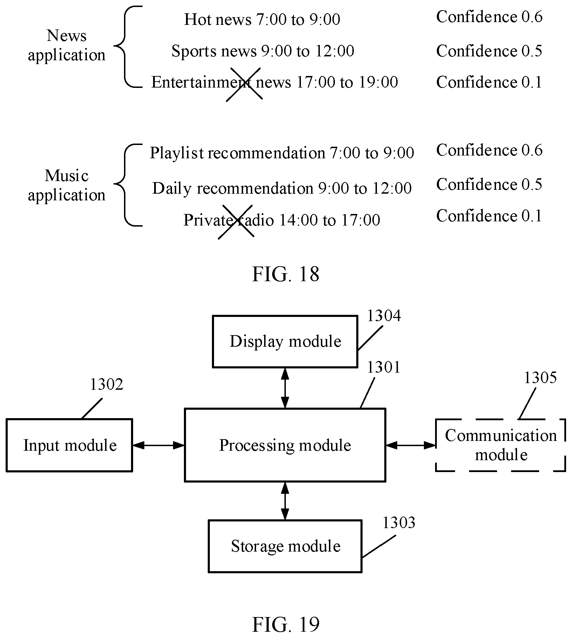

For example, as shown in FIG. 18, user profiles reported by the news application include: {hot news 7:00 to 9:00; sports news 9:00 to 12:00; entertainment news 17:00 to 19:00}. The user profiles indicate that the user is accustomed to searching for and browsing the hot news from 7:00 to 9:00, searching for and browsing the sports news from 9:00 to 12:00, and searching for and browsing the entertainment news from 17:00 to 19:00. The anti-cheating module may calculate confidences of the user profiles of the atomic services reported by the news application. After calculation, it is assumed that the confidences of the atomic services are {hot news 0.6; sports news 0.5; entertainment news 0.1}. It is assumed that a threshold is 0.4. In this case, a confidence of the "entertainment news" service is lower than the threshold. This indicates that there is an extremely low probability that the atomic service, namely, the entertainment news, is actually tapped by the user in the period from 17:00 to 19:00, and the user profile of the entertainment news may be a false profile fabricated by the news application. The anti-cheating module may control a service presentation module to present function information of the hot news service and a function information of the sports news service, and not present function information of the low-confidence entertainment news service. Optionally, it is considered that the confidence of the user profile of the hot news service is higher than the confidence of the user profile of the sports news service. A probability that the user wants to use the hot news service is higher, and the service presentation module may present the related function information of the hot news service in front of the related function information of the sports news service.

Similarly, as shown in FIG. 18, user profiles reported by the music application include: {playlist recommendation 7:00 to 9:00; daily recommendation 9:00 to 12:00; private radio 14:00 to 17:00}. The anti-cheating module may calculate confidences of the user profiles of the atomic services reported by the news application. After calculation, it is assumed that the confidences of the atomic services are: {playlist recommendation 0.6; daily recommendation 0.5; private radio 0.1}. This indicates that a probability that the user actually taps the private radio service in the period from 14:00 to 17:00 is extremely low, and the user profile of the private radio service may have a cheating phenomenon. Therefore, the anti-cheating module may control the service presentation module to present the playlist recommendation service and the daily recommendation service.

For another example, in a scenario, it is assumed that a user profile reported by an application includes only a user profile of a single atomic service. The anti-cheating module may calculate a confidence of the atomic service. If the confidence of the atomic service is lower than a threshold, the electronic device may recommend an application icon card of the application on the Celia suggestion card, instead of replacing the application icon card of the application with the atomic service.

The mobile phone may further use another solution to prevent the third-party application from cheating. For example, the mobile phone may further calculate duration of using the atomic service by the user, determine a confidence of the atomic service based on the duration, a quantity of historical taps on the atomic service, and a quantity of times of historical exposure of the atomic service, remove an atomic service whose confidence is lower than the threshold from candidate to-be-recommended atomic services, and do not recommend the atomic service whose confidence is low.

The foregoing one or more interfaces are all examples, and there may be another interface design manner. A specific interface design manner is not limited in this application.

For example, the electronic device may alternatively present both the application icon card of the application and the FA card of the application on the Celia suggestion card. For example, the electronic device may present both an application icon card of a news application 1 and the FA card of the "hot news" service on the Celia suggestion card.

For another example, the electronic device may alternatively display a target card of the application, and the target card may include information about one or more FA cardsWhen the user taps information about an FA, the electronic device may jump to an interface corresponding to the FA (for example, jump to an interface corresponding to the "hot news" service). When the user taps another area on the target card, the electronic device may start the application, and jump to a main interface of the application, or jump to an interface presented when the application is exited last time. In other words, the target card may have functions of the FA card and the application icon card.

It should be noted that the foregoing plurality of embodiments may be combined, and a combined solution is implemented. Optionally, some operations in the procedures of the method embodiments are optionally combined, and/or a sequence of some operations is optionally changed. In addition, an execution sequence of steps of each procedure is merely an example, and does not constitute a limitation on an execution sequence of the steps. The steps may be alternatively performed in another execution sequence. It is not intended to indicate that the execution sequence is the only sequence in which these operations can be performed. A person of ordinary skill in the art may learn a plurality of manners of re-ranking the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments. Alternatively, an execution body (for example, a functional module) of some steps in the method embodiments may be replaced with another execution body.

In addition, the method embodiments may be implemented separately or in combination.

Some other embodiments of this application provide an apparatus. The apparatus may be the foregoing terminal. The apparatus may include a display, a memory, and one or more processors. The display and the memory are coupled to the processor. The memory is configured to store computer program code, and the computer program code includes computer instructions. When the processor executes the computer instructions, the terminal may perform the functions or the steps performed by the mobile phone in the foregoing method embodiments. For a structure of the terminal, refer to the electronic device shown in FIG. 4 or FIG. 5.

A core structure of the terminal may be represented as a structure shown in FIG. 19. The terminal includes a processing module 1301, an input module 1302, a storage module 1303, and a display module 1304.

The processing module 1301 may include at least one of a central processing unit (CPU), an application processor (application processor, AP), or a communication processor (communication processor, CP). The processing module 1301 may perform an operation or data processing related to control and/or communication of at least one of other elements of the user electronic device. Specifically, the processing module 1301 may be configured to control, based on a specific trigger condition, content displayed on a primary screen. The processing module 1301 is further configured to process input instructions or data, and determine a display style based on processed data.

Optionally, the processing module 1301 may be implemented as the processor 501 shown in FIG. 5.

The input module 1302 is configured to obtain an instruction or data entered by a user, and transmit the obtained instructions or data to another module of the electronic device. Specifically, an input manner of the input module 1302 may include a touch, a gesture, proximity to a screen, or the like, or may be a voice input. For example, the input module may be a screen of the electronic device, and may obtain an input operation of the user, generate an input signal based on the obtained input operation, and transmit the input signal to the processing module 1301.

The storage module 1303 may include a volatile memory and/or a non-volatile memory. The storage module is configured to store at least one related instruction or data in another module of the user electronic device. Specifically, the storage module may record a user profile of each atomic service.

Optionally, the storage module 1303 may be implemented as the memory 502 shown in FIG. 5.

The display module 1304 may include, for example, a liquid crystal display (LCD), a light-emitting diode (LED) display, an organic light-emitting diode (OLED) display, a micro-electro-mechanical system (MEMS) display, or an electronic paper display. The display module is configured to display content (for example, a text, an image, a video, an icon, or a symbol) that can be viewed by the user.

Optionally, the display module 1304 may be implemented as the display 504 shown in FIG. 5.

Optionally, a communication module 1305 is further included, and is configured to support a personal terminal in communicating with another personal terminal (through a communication network). For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

Optionally, the communication module 1305 may be implemented as the transceiver 503 shown in FIG. 5.

It should be noted that each functional module of the apparatus may perform one or more steps in the method embodiments.

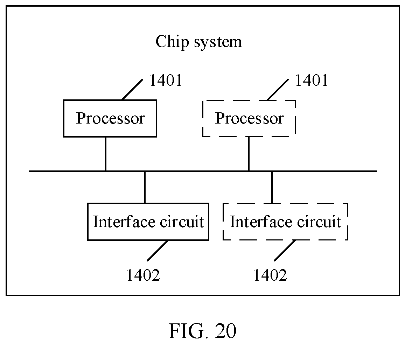

An embodiment of this application further provides a chip system. As shown in FIG. 20, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the electronic device, the electronic device is enabled to perform the functions or the steps performed by the mobile phone in the method embodiments.

An embodiment of this application further provides a computer program product. When the computer program product runs on a computer, the computer is enabled to perform the functions or the steps performed by the mobile phone in the method embodiments.

The foregoing descriptions about implementations allow a person skilled in the art to clearly understand that, for the purpose of convenient and brief description, division of the functional modules is used as an example for illustration. In actual application, the functions can be allocated to different modules and completed based on a requirement, that is, an inner structure of an apparatus is divided into different functional modules to complete all or some of the functions described above.

In the several embodiments provided in this application, it should be understood that the disclosed apparatuses and methods may be implemented in another manner. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may be one or more physical units, may be located in one place, or may be distributed on a plurality of different places. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service recommendation method, applied to an electronic device, wherein the method comprises:
arranging an application icon card or an FA card of at least one application on a display recommendation interface according to a display recommendation rule, wherein the application icon card is used to provide an entry for starting the application, and the FA card is used to display at least a part of function information of the application on the FA card; and
when an application icon card of a first application is arranged on the display recommendation interface, displaying an FA card of the first application at an arrangement location of the application icon card of the first application, wherein the at least one application comprises the first application.

2. The method according to claim 1, wherein the display recommendation rule is used to sequentially arrange the application icon card and/or the FA card of the at least one application based on historical data of using the at least one application by a user.

3. The method according to claim 1 or 2, wherein the displaying an FA card of the first application at an arrangement location of the application icon card of the first application further comprises:
when display sizes of the FA card of the first application and the application icon card of the first application on the display recommendation interface are different, rearranging the application icon card or the FA card of the at least one application on the display recommendation interface according to the display recommendation rule, to adapt to a display effect of the FA card of the first application on the display recommendation interface.

4. The method according to claim 3, wherein the rearranging the application icon card or the FA card of the at least one application on the display recommendation interface according to the display recommendation rule comprises:
when the display size of the FA card of the first application on the display recommendation interface is greater than the display size of the application icon card of the first application on the display recommendation interface, skipping arranging an application icon card or an FA card of a second application on the display recommendation interface, wherein the at least one application comprises the second application.

5. The method according to any one of claims 1 to 4, wherein the displaying an FA card of the first application at an arrangement location of the application icon card of the first application comprises:
when both the application icon card of the first application and the FA card of the first application are arranged on the display recommendation interface, displaying only the FA card of the first application on the display recommendation interface.

6. The method according to any one of claims 1 to 5, wherein the method further comprises:
in response to a first operation of the user on the FA card of the first application, opening a page that is of the first application and that is about function information displayed on the FA card.

7. The method according to any one of claims 1 to 6, wherein the FA card of the first application is used to display function information of a first atomic service, and the displaying an FA card of the first application at an arrangement location of the application icon card of the first application comprises:
when a first recommendation condition of the first atomic service is met, displaying the FA card of the first application at the arrangement location of the application icon card of the first application, and displaying the function information of the first atomic service on the FA card of the first application.

8. The method according to claim 7, wherein the first recommendation condition of the first atomic service is determined by a user profile that is of the first atomic service and that is provided by the first application.

9. The method according to claim 7, wherein the method further comprises:
obtaining use information of historical association between a third application and the first atomic service, and determining the first recommendation condition of the first atomic service based on the use information of the historical association.

10. The method according to any one of claims 7 to 9, wherein the first recommendation condition comprises one or more of the following conditions: the user uses the electronic device in a time period in which the first atomic service is recommended, the electronic device is at a specific location, the electronic device is in an environment in which the first atomic service is recommended, a battery level of the electronic device is in a first range, signal strength of the electronic device is in a second range, and the electronic device is connected to a target peripheral device.

11. The method according to any one of claims 1 to 10, wherein the FA card of the first application is used to display the function information of the first atomic service and/or function information of a second atomic service; and
the displaying an FA card of the first application at an arrangement location of the application icon card of the first application comprises: when both the first recommendation condition of the first atomic service and a second recommendation condition of the second atomic service are met, displaying the FA card of the first application at the arrangement location of the application icon card of the first application, and simultaneously displaying the function information of the first atomic service and the function information of the second atomic service on the FA card of the first application.

12. The method according to any one of claims 1 to 10, wherein the FA card of the first application is used to display the function information of the first atomic service and/or function information of a second atomic service; and
the displaying an FA card of the first application at an arrangement location of the application icon card of the first application comprises: when both the first recommendation condition of the first atomic service and a second recommendation condition of the second atomic service are met, displaying the FA card of the first application at the arrangement location of the application icon card of the first application, and displaying one of the function information of the first atomic service and the function information of the second atomic service on the FA card of the first application based on recommendation priorities of the first atomic service and the second atomic service.

13. The method according to any one of claims 1 to 12, wherein the displaying an FA card of the first application at an arrangement location of the application icon card of the first application comprises:
when a historical click-through rate of the function information of the first atomic service displayed on the FA card of the first application is lower than a threshold, reducing time for displaying the FA card of the first application at the arrangement location of the application icon card of the first application.

14. The method according to any one of claims 1 to 12, wherein the method further comprises:
when an application icon card of a fourth application is arranged on the display recommendation interface, displaying an FA card of the fourth application at an arrangement location of the application icon card of the fourth application, and displaying function information of a third atomic service on the FA card of the fourth application, wherein the at least one application further comprises the fourth application; and
when a historical click-through rate of the function information of the third atomic service displayed on the FA card of the fourth application is lower than a threshold, skipping displaying the FA card of the fourth application at the arrangement location of the application icon card of the fourth application.

15. The method according to claim 13, wherein the displaying an FA card of the first application at an arrangement location of the application icon card of the first application comprises:
when the historical click-through rate of the function information of the first atomic service displayed on the FA card of the first application is higher than the threshold, restoring the time for displaying the FA card of the first application at the arrangement location of the application icon card of the first application.

16. An electronic device, comprising a processor, a display, and a memory, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 15.

17. A computer-readable storage medium, wherein the computer-readable storage medium comprises a computer program, and when the computer program is run on an electronic device, the electronic device is enabled to perform the method according to any one of claims 1 to 15.
